# DEMANDE DE BREVET EUROPEEN

(11) **EP 0 524 072 A1**
(43) Date de publication de la demande: **20.01.1993**
(21) Numéro de dépôt: 92402001.9
(22) Date de dépôt: 10.07.1992
(51) Int. Cl.: G06F 15/20

(54) **Procédé de mise en page de documents structurés**

(30) Priorité: 17.07.1991 FR 9109014
(71) Demandeur: BULL S.A., F-92800 Puteaux (FR)
(72) Inventeur: Allouche, Sylvia, F-75006 Paris (FR); Lopez, Françoise, F-92270 Bois-Colombes (FR); Charquaoui, Rachid, Appartement 673, F-93170 Noisy-le-Grand (FR)

(57) **Abrégé**

Ce procédé de mise en page de documents contenant du texte et des graphiques est mis en oeuvre par un module à formater. Il effectue, en premier lieu, la lecture de la structure logique générique de la structure logique spécifique et de la structure de mise en page générique pour créer, au fur et à mesure, la structure de mise en page spécifique selon une pluralité de processus de mise en page récursifs.

Application : formatage et retraitement des documents structurés.

## Description

La présente invention concerne un procédé de mise en page de documents structurés contenant du texte et des graphiques mis en oeuvre par un module à formater.

De manière générale, et jusqu'à présent, les moyens d'échange électronique de documents destinés à être restitués soit sur papier après impression, soit par affichage sur écran, ont été élaborés avec pour objectif de permettre la reproduction desdits documents sur la plupart des appareils disponibles en adaptant dynamiquement la présentation des documents aux caractéristiques des appareils utilisés, la présentation des documents étant par ce fait dépendante de l'appareil utilisé.

La demande de brevet européenne EPA-0339461 décrit un procédé qui tend à satisfaire l'atteinte de cet objectif, objectif qui correspond à un besoin important exprimé dans le passé à un moment où les appareils de restitution étaient particulièrement limités. Cependant l'importance accordée à ce besoin décline et a tendance à disparaître avec la généralisation des appareils modernes de restitution. En outre, lié à cette généralisation, un inconvénient est présenté en ce que le choix d'un tel objectif ne permet pas de répondre à un autre besoin dont l'objet principal est d'autoriser une présentation de documents indépendante des appareils de restitution. Pour cela, un standard d'échange peut être élaboré et son utilisation permet de répondre à ce besoin en favorisant avantageusement la communication entre les individus. En effet, les utilisateurs d'un tel standard analyseront, lors de l'échange d'un document, strictement le même document, le document reçu étant la reproduction exacte et fidèle du document original, et ceci quel que soit le matériel et donc l'appareil de restitution dont ils disposent. Ainsi pourront-ils dialoguer efficacement, et sans ambiguïté se référer, par exemple lors d'une conversation téléphonique, au n^{ième} mot de la i^{ième} ligne de la page j, ce mot étant identique pour tous les utilisateurs. Mais pour autoriser ce type d'échange, les appareils de restitution utilisés doivent permettre, éventuellement avec une définition différente, la reproduction d'une quelconque image. La généralisation des PC avec écran graphique et des imprimantes laser permet de répondre aujourd'hui à cette attente.

La télécopie est un autre moyen actuel de satisfaire ce besoin et de favoriser la communication entre les individus en permettant l'échange de documents transformés en images décrites point par point. Cet autre moyen présente cependant divers inconvénients. Tout d'abord, les volumes échangés sont importants, ensuite les performances et la qualité de la restitution sont médiocres, enfin les documents reçus ne sont pas retraitables.

Un standard d'échange adéquat permet d'éviter ces derniers inconvénients. Ainsi le standard international ODA (Office Document Architecture) définit une représentation de documents qui offre différents choix de formes d'échange entre émetteurs et récepteurs de documents. De cette manière, il est possible d'échanger les documents dans une forme purement formatée s'il n'est pas désiré laisser au récepteur (par exemple un service d'impression) la possibilité de retraiter ces derniers. Les documents peuvent être également échangés dans une forme formatéeretraitable si un retraitement de ceux-ci est désiré. Dans ces deux cas, une restitution fidèle est garantie. En outre, le standard ODA autorise également l'échange de documents sous une forme purement retraitable, dans cette troisième hypothèse, le récepteur doit formater le document reçu pour pouvoir le restituer. Le résultat du formatage dépend du récepteur utilisé car le processus de formatage ne peut être intégralement standardisé, entre autres parce que les algorithmes de coupure des mots dépendent des langues et des habitudes, ou parce qu'il existe de multiples algorithmes de justification, etc... Dans ce troisième cas, cependant, l'unicité de la présentation des documents n'est plus garantie.

Plus particulièrement, et pour une meilleure appréhension de l'idée de l'invention, suivent quelques précisions et définitions relativement au standard ODA. Le standard ODA est défini, quant à ses objectifs, dans le document ISO 8613 édité par l'Organisation Internationale pour la Standardisation (ISO), le principal objectif étant de proposer un modèle qui facilite l'échange de documents en permettant tout d'abord une présentation du document identique à la présentation d'origine et/ou, de plus, un traitement aisé pour l'édition et le reformatage dudit document.

Dans ce but est définie une architecture du document basée sur un ensemble de règles précisant son modèle structurel et sa représentation descriptive.

Le modèle structurel fournit deux vues différentes mais complémentaires du contenu d'un document spécifique. Une première vue, dite logique, associe le contenu avec des éléments structurels tels que les chapitres, les appendices, les paragraphes, les renvois, les titres, les figures, etc.. Une seconde vue, relative à la mise en page, associe le contenu à des éléments structurels qui concernent le milieu de présentation tel que les pages et les zones définies à l'intérieur des pages. Ces éléments structurels d'un document spécifique sont appelés objets : objets logiques ou objets de mise en page.

Ainsi la structure logique spécifique associe le contenu d'un document à une hiérarchie d'objets logiques et autorise la représentation d'un document dans une forme retraitable alors que la structure de mise en page spécifique associe le contenu d'un document à une hiérarchie d'objets de mise en page et autorise la représentation d'un document dans une forme formatée.

En outre, le modèle structurel d'un document permet de partager son contenu en éléments structurels appelés ci-après parties du contenu. Les informations propres à chaque partie de contenu appartiennent à un type particulier de contenu et la structure de ces informations est définie par une architecture de contenu consistant d'une part en la définition d'un jeu d'éléments de contenu, de fonctions de commande et d'attributs, et d'autre part en des règles d'application des fonctions de commande et attributs aux éléments de contenu.

Par ailleurs, la structure générique d'un document assure la représentation des caractéristiques communes à, et en relation avec, un certain nombre d'objets-dans un document. Elle assure de même la représentation de caractéristiques communes à un groupe de documents.

Dans beaucoup de documents, il est possible de rencontrer des jeux d'objets ayant des caractéristiques communes, par exemple des objets logiques représentatifs de parties comportant une séquence d'objets subordonnés (hiérarchiquement inférieurs) relatifs à des paragraphes et qui ont les mêmes caractéristiques ou encore des pages qui auraient les mêmes têtes et les mêmes terminaisons, etc... Un élément structurel d'un document qui présente un tel groupe de caractéristiques communes est appelé une classe d'objets.

La structure logique générique se compose de toutes les classes d'objets logiques et des parties associées de contenu générique d'un document alors que la structure de mise en page générique se compose de toutes les classes d'objets de mise en page et des parties associées de contenu générique d'un document.

Concernant la représentation descriptive d'un document, cette dernière permet d'introduire les éléments descriptifs d'une architecture de document. Ainsi un document à échanger sera représenté comme une collection de constituants (par exemple le profil d'un document, le style de présentation, le style de mise en page, etc...) dont chacun est caractérisé par un jeu d'attributs, chaque attribut ayant un nom et une valeur qui désigne soit une caractéristique d'un élément structurel, soit une relation avec d'autres constituants.

S'appuyant sur cette architecture utilisant le standard ODA précité, la présente invention propose un procédé de mise en page de documents structurés qui ne présente pas les divers inconvénients des outils de formatage connus, en favorisant de manière très significative la communication entre les individus.

En outre, de manière connue et propre au standard ODA décrit dans le document ISO 8613, le procédé de mise en page du genre mentionné dans le préambule, en premier lieu, effectue la lecture de la structure logique générique, de la structure logique spécifique et de la structure de mise en page générique pour créer, au fur et à mesure de cette lecture, la structure de mise en page spécifique.

De même le document ISO 8613 propose d'utiliser pour cela un procédé de mise en page mis en oeuvre par le module à formater incluant d'une part un procédé de mise en page du document créant la structure de mise en page spécifique conformément à la structure de mise en page générique et aux informations découlant de la structure logique spécifique, de la structure logique générique et, lorsqu'ils existent, des styles de mise en page, et d'autre part associé au procédé de mise en page du document un procédé de mise en page du contenu, utilisant les informations contenues dans les styles de présentation et chargé de mettre en page les différentes parties du contenu du document dans les zones disponibles déterminées lors de l'application du procédé de mise en page du document.

Ainsi, il est utilisé les différentes informations contenues dans le flot des données relatives au document à traiter et/ou formater pour autoriser la création de la structure de mise en page spécifique et permettre ainsi, lors d'un échange de document, une reproduction (impression ou visualisation) exacte et fidèle du document original.

En effet, lors de l'application du procédé de mise en page du document des objets de mise en page sont créés et les zones disponibles à l'intérieur de ces objets de mise en page ainsi créés sont déterminées pour le formatage du contenu du document, ledit procédé prenant alors en charge l'attribution dudit contenu à ces zones disponibles déterminées à cet effet. En outre, le procédé de mise en page du contenu'utilise les informations contenues dans les attributs de présentation qui s'appliquent aux parties du contenu à mettre en page dans les zones disponibles déterminées. Lesdits attributs de présentation peuvent être obtenus prioritairement à partir des styles de présentation qui se réfèrent à la structure logique générique, à la structure logique spécifique et ensuite à partir de la structure de mise en page générique. La priorité réservée aux styles de présentation obtenus à partir des structures logiques générique et spécifique est explicitement indiquée par le procédé de mise en page dans la structure de mise en page spécifique créée.

Pour résumer, dans un premier temps, la structure logique spécifique est lue jusqu'à ce que soit trouvé, soit une directive de mise en page désignant un objet de mise en page, soit un objet logique basique (non composite) avec un contenu à formater, Puis, la structure de mise en page est analysée de manière à trouver l'objet de mise en page requis.

Cependant, un problème se pose relativement à la gestion par le module à formater des structures de mise en page générique et spécifique. Une solution consiste à, chaque fois que le module à formater requiert un objet de mise en page, analyser la structure de mise en page générique pour savoir si cet objet de mise en page peut être créé (en accord avec le contenu de l'attribut générateur d'objets subordonnés) et à quel endroit. Ensuite, le module à formater accède à la structure de mise en page spécifique pour créer l'objet de mise en page requis de même que les objets de mise en page intermédiaires requis devant ledit objet. Une telle solution est lourde et implique nécessairement une pluralité de contrôles et d'accès à l'objet.

Afin de surmonter cette difficulté et d'optimiser très sensiblement le procédé de mise en page, le procédé selon l'invention propose la mise en oeuvre d'une solution avantageuse et efficace.

Suivant cette solution, le procédé de mise en page selon l'invention est remarquable en ce qu'il utilise une pluralité de processus de mise en page récursifs, ainsi, pour créer la structure de mise en page spécifique, il est d'abord créé l'objet de plus haut niveau dans la hiérarchie de la structure de mise en page spécifique, objet appelé racine physique, puis selon la structure de mise en page générique, l'attribut "générateur d'objets subordonnés" de la racine physique est évalué pour créer toute la structure requise, de telle manière que chaque fois que le "générateur d'objets subordonnés" contient un terme requis ou répétitif, un objet de mise en page est créé tandis que lorsqu'il contient un terme optionnel, optionnel répétifif ou de choix un objet temporaire est créé, ensuite à partir de l'objet de plus haut niveau dans la hiérarchie de la structure logique spécifique, objet appelé racine logique, est appliqué un traitement récursif à tous les objets subordonnés de la racine logique jusqu'à remonter à ladite racine logique en établissant des contraintes de création et de placement.

Par conséquent, lorsque le module à formater requiert un objet de mise en page, seule la structure de mise en page spécifique est analysée à moins qu'un objet temporaire ne soit trouvé. Dans ce cas, la structure de mise en page générique est utilisée pour lever l'ambiguïté puis l'ensemble résultant est inséré dans la structure de mise en page spécifique et ceci autant de fois que c'est nécessaire.

Un objet temporaire contient l'évaluation de l'attribut générateur "générateur d'objets subordonnés", évaluation qui peut impliquer un facteur optionnel, optionnel répétitif ou de choix. L'objet temporaire indique qu'à la position où il se'trouve dans la structure de mise en page, un objet de mise en page potentiel sera effectivement créé dès qu'apparaîtra une directive de mise en page impliquant ledit objet de mise en page potentiel.

Enfin, le module à formater lors du traitement de la structure établit deux types de contraintes, les contraintes de création pour, par exemple, créer un nouvel objet de mise en page ou une classe d'objets de mise en page, ... et les contraintes de placement par exemple lorsqu'une concaténation est requise.

C'est grâce à ce traitement des informations systèmatique et rigoureux que l'invention permet de tirer les divers avantages précédemment mentionnés.

La description suivante en regard des dessins annexés, le tout donné à titre d'exemple non limitatif, fera bien comprendre comment l'invention peut être réalisée.

La figure 1 représente de manière schématique l'environnement dans lequel vient s'insérer le module à formater mettant en oeuvre le procédé de mise en page de l'invention.

La figure 2 propose un schéma représentant les différentes étapes parcourues par la fonction récursive "Makelayout".

La figure 3 propose un schéma représentant les différentes étapes parcourues par la fonction récursive "Give object ext".

La figure 4 propose un schéma représentant les différentes étapes parcourues par la fonction récursive "Give object kernel".

La figure 5 propose un schéma représentant les différentes étapes parcourues par la fonction "Fill Gene".

La figure 6 propose un schéma représentant les différentes étapes parcourues par la fonction "Fillblock".

La figure 7 propose un schéma représentant la boucle de traitement utilisée par la fonction "Fillblock".

La figure 8 propose un schéma d'un branchement de la boucle de la figure 7 pour le traitement de parties du contenu sans lignes mobiles.

La figure 9 propose un schéma d'un branchement de la boucle de la figure 7 pour le traitement de parties du contenu avec lignes mobiles.

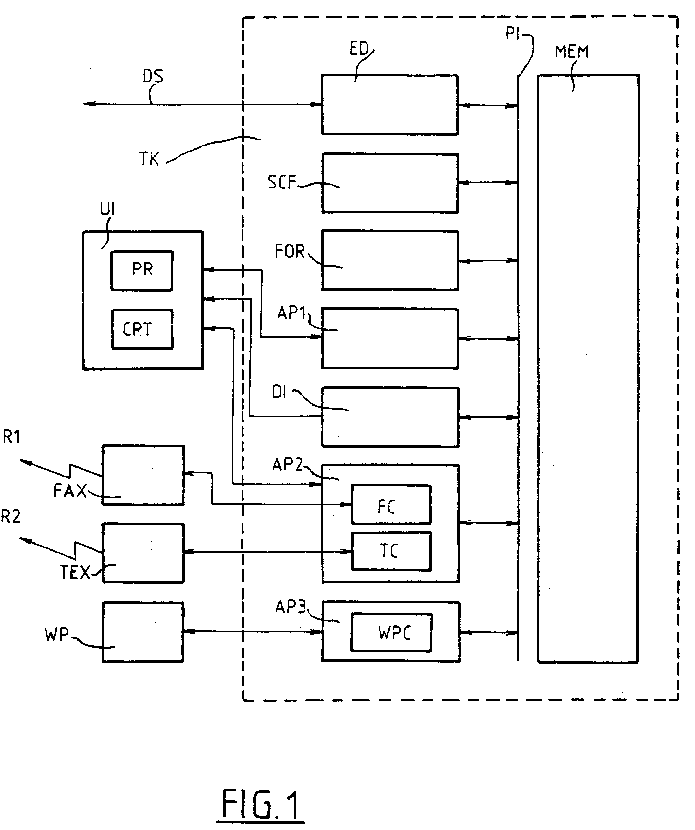

Sur la figure 1 est présenté, de manière schématique, l'environnement dans lequel est placé le module à formater les documents structurés selon l'invention. Le module à formater FOR s'insère dans un outil TK parfaitement approprié pour réaliser l'échange d'informations (textes et graphiques) conformément au standard international ODA, cet outil étant constitué d'une pluralité de modules.

Le flux d'informations DS bidirectionnel est reçu ou émis par un module de codage-décodage ED. Le flux d'informations en provenance d'un matériel extérieur, reçu par le module ED transmis dans un format d'échange ODIF propre au standard ODA est codé dans un format ODASM (développement et marque de International Computers Limited) adapté au stockage interne à l'outil dans un module MEM. Inversement, les informations stockées dans le module MEM de l'outil TK dans le format ODASM sont émises par le module ED dans le format d'échange ODIF. Le codage-décodage est prévu pour répondre aux objectifs fixés par divers organismes, relativement aux profils de document pour lesquels trois niveaux sont définis, niveaux appelés respectivement pour EWOS, CEN/CENELEC : Q111, Q112, Q113, pour le CCITT : PM11, PM26, PM36, et, mais définis de manière sensiblement différente, pour ISO : FOD11, FOD26, FOD36.

Ainsi un module de codage-décodage du format ODASM selon les profils Q111, Q112 ou Q113 au format ODIF permet de convertir un document ODA d'une forme retraitable, formatée ou formatée-retraitable dans le format d'échange ODIF conforme aux flux de données de classe A. Tous les attributs des profils de document Q111, Q112 et Q113 stockés dans le module MEM : structures logique et de mise en page, génériques et spécifiques, styles de présentation et de mise en page, parties du contenu et profils, sont convertis. Inversement, le module de codage-décodage permet de convertir un flux de données de format ODIF de classe A en un document de format ODASM selon Q111, Q112 ou Q113 qui est stocké dans le module MEM.

Une fois le flux DS converti par le module ED dans le format interne ODASM, le dialogue entre les divers modules et le module MEM pour le traitement dans l'outil TK est assuré par l'interface de programmation applicatif PI. En effet, l'interface PI supporte la sélection, la circulation et la manipulation des structures et objets du document ainsi que le contrôle par l'intermédiaire de fonctions associées. Elle a pour rôle de fournir une définition dans un langage approprié (par exemple le langage C) d'un jeu de structures de données permettant de représenter les constituants ODA et leurs attributs et d'un jeu de fonctions permettant le stockage et autorisant l'accès à ces structures de données. Chaque module de l'outil TK utilise l'interface PI de manière à pouvoir lire dans le module MEM un document ODA déjà traité par un autre module de l'outil et/ou à stocker le document résultant dans le module MEM.

De cette manière, un document stocké dans une forme formatée-retraitable peut éventuellement être retraité de telle manière à être réduit soit à une forme formatée, soit à une forme retraitable. Pour cela, l'outil TK comporte un module de filtrage de classe et de structure SCF, qui traite des documents dans le format interne ODASM lus, par l'intermédiaire de l'interface PI, dans le module MEM et produit des documents toujours dans le format ODASM pour être stockés, par l'intermédiaire de l'interface PI, dans le module MEM.

Pour obtenir des documents dans une forme formatée à partir d'une forme formatée-retraitable, le module de filtrage SCF élimine les structures logiques générique et spécifique ainsi que les styles de mise en page du document reçu. Lorsque le document est produit dans cette forme formatée, il ne pourra être qu'affiché sur un écran, imprimé ou, après conversion dans le module ED, réémis dans le flux de données dans le format ODIF.

De même, pour obtenir des documents dans une forme retraitable à partir d'une forme formatée-retraitable, le module de filtrage SCF élimine la structure de mise en page spécifique et supprime des parties du contenu toutes les informations relatives aux fonctions de contrôle de mise en page. Les documents ainsi traités peuvent être alors convertis dans un format d'un traitement de texte désiré.

Diverses facilités sont offertes pour élaborer des diagnostics en permettant l'examen des structures et attributs d'un document ODA. Pour cela, un module de diagnostic DI comporte plusieurs composants qui autorisent des recherches spécifiques dans un document ODA, le document source ODA pouvant être dans l'une des trois formes suivantes : formatée, formatée-retraitable ou retraitable. Parmi ces composants, un premier a pour caractéristique principale de générer un fichier qui contient la structure arborescente des objets d'un document ODA dans le format interne ODASM. Ce fichier une fois généré peut être, par l'intermédiaire d'une interface utilisateur UI, affiché sur un écran CRT et imprimé sur papier PR. De même un second composant permet de générer un fichier qui contient toutes les structures d'un document source ODA dans le format interne ODASM, le fichier pouvant être également affiché sur l'écran CRT et imprimé sur papier PR. Les structures contenues dans le fichier correspondent aux structures logiques générique et spécifique, aux structures de mise en page générique et spécifique, aux parties du contenu, aux styles de présentation et de mise en page et aux profils du document.

L'outil TK comporte en outre plusieurs modules d'applications AP₁, AP₂, AP₃,...

Un premier module d'application AP₁ permet à l'utilisateur de l'outil TK d'effectuer différents traitements sur les documents ODA : conversion ODIF à partir de et retour à ODA, formatage, survol du document (contrôle de l'affichage ou de l'impression du document avec accès direct aux structures logiques et de mise en page, autorisant l'accès aux pages, paragraphes, chapitres, etc...), défilement du document, réduction ou agrandissement d'une partie du document affiché, l'historique des dix derniers accès étant sauvegardé.

Un second module d'application AP₂ autorise l'échange de documents utilisant des services tels que Teletex TEX ou la télécopie FAX. Des documents générés au moyen de traitements de texte et d'éditeurs graphiques ou des documents composés de pages codés en numérique peuvent être sélectionnés par un utilisateur puis transmis vers différents récepteurs R₁, R₂,..., Rn de matériels externes. De même des documents reçus par l'intermédiaire des services Teletex TEX ou télécopie FAX peuvent être affichés CRT, imprimés PR ou mémorisés MEM dans le format ODASM qui est commun à toutes les applications de l'outil TK pour ensuite être traités selon l'une quelconque des applications ODA de l'outil TK.

Dans ce but, le module AP₂ comporte un convertisseur pour télécopie FC et un convertisseur pour télétex TC. Les convertisseurs FC et TC convertissent les documents internes du format ODASM au format adéquat pour la transmission vers les matériels externes, par exemple format T.4 pour le service télécopie et format T.61 pour le service télétex, et assurent la conversion inverse avec les documents reçus par l'intermédiaire de ces services.

Un autre module d'application AP₃ comporte un convertisseur WPC pour traitement de texte codé, le codage de documents contenant du texte et des graphiques permettant de faciliter leurs transferts. Dans cette application, le document est émis codé à partir d'une machine à traitement de texte WP extérieure vers l'outil TK. Le convertisseur WPC a alors pour rôle de traduire le format du traitement de texte codé dans le format interne ODASM et vice-versa.

Enfin, l'outil TK comporte, comme précisé précédemment, le module FOR pour le formatage des documents structurés contenant du texte et des graphiques, qui met en oeuvre le procédé de mise en page selon l'invention suivant le standard ODA. Les documents lus en entrée ou produits en sortie du module FOR sont, bien entendu, dans le format interne ODASM.

Conformément aux propositions du document ISO 8613, selon ce procédé de mise en page, est effectuée en premier lieu la lecture de la structure logique générique, de la structure logique spécifique et de la structure de mise en page générique pour créer au fur et à mesure de cette lecture la structure de mise en page spécifique.

De même, le procédé de mise en page mis en oeuvre par le module à formater inclut d'une part un procédé de mise en page du document créant la structure de mise en page spécifique conformément à la structure de mise en page générique et aux informations découlant de la structure logique spécifique, de la structure logique générique et, lorsqu'ils existent, des styles de mise en page, et d'autre part, associé au procédé de mise en page du document un procédé de mise en page du contenu chargé de mettre en page les différentes parties du contenu dans les zones disponibles déterminées lors de l'application du procédé de mise en page du document.

De manière avantageuse, le procédé de mise en page selon l'invention est remarquable en ce qu'il utilise une pluralité de processus de mise en page récursifs, ainsi, pour créer la structure de mise en page spécifique, il est d'abord créé l'objet de plus haut niveau dans la hiérarchie de la structure de mise en page spécifique, objet appelé racine physique, puis selon la structure de mise en page générique, l'attribut "générateur d'objets subordonnés" de la racine physique est évalué pour créer toute la structure requise, de telle manière que chaque fois que le générateur d'objets subordonnés" contient un terme requis ou répétitif, un objet de mise en page es! créé tandis que lorsqu'il contient un terme optionnel, optionnel répétitif ou de choix un objet temporaire est créé, ensuite à partir de l'objet de plus haut niveau dans la hiérarchie de la structure logique spécifique, objet appelé racine logique, est appliqué un traitement récursif à tous les objets subordonnés de la racine logique jusqu'à remonter à ladite racine logique en établissant des contraintes de création et de placement.

Ainsi, la racine physique est d'abord créée, puis l'attribut "générateur d'objets subordonnés" est évalué, tout ce qui est requis et qui n'est donc pas optionnel est créé pour élaborer un embryon de structure de mise en page. Ensuite, les objets logiques sont lus en établissant les contraintes de création et de placement. Chaque objet est cherché au moyen de la fonction récursive "Give object" subdivisée en "Give object ext" et "Give object kernel" (explicitées dans la suite) qui permet de trouver l'objet qui correspond aux directives spécifiées, si l'objet n'est pas trouvé, il est créé, et ceci jusqu'au dernier objet. C'est alors que le procédé de mise en page du contenu est appelé, pour placer le contenu ainsi élaboré si la zone éditable restante est de taille suffisante. Dans ce cas, la zone éditable restante est déterminée pour la prochaine opération de placement du contenu. Si la taille de la zone éditable n'est pas suffisante, le contenu est placé après cette zone si aucune directive ne l'interdit. Si une directive interdit ce déplacement, une opération dite de retour en arrière ou "backtracking" est imposée pour complaire à cette directive, ce qui implique un reformatage d'un ou plusieurs objets.

En outre, les termes répétitifs posent un problème que le procédé selon l'invention permet de résoudre de la façon suivante. Répétitif signifie dans le présent contexte que les objets impliqués doivent être créés au'moins une fois. Ainsi, chaque fois qu'un terme répétitif est contenu dans "un générateur d'objets subordonnés" deux objets différents sont créés et insérés : un objet obligatoire ou une séquence d'objets correspondants et un objet temporaire qui contient un terme optionnel répétitif. Ceci permet au module à formater de créer au moins une fois les objets spécifiés comme répétitifs et s'il était requis de les créer une nouvelle fois, il suffirait alors d'utiliser l'objet temporaire optionnel répétitif autant de fois qu'il est nécessaire.

De même, optionnel répétitif signifie que les objets impliqués peuvent être créés, zéro, une ou plusieurs fois. Chaque fois qu'un objet temporaire optionnel répétitif est utilisé (par exemple requis par une directive de mise en page), les objets correspondants sont créés et insérés puis un autre objet temporaire optionnel répétitif équivalent est créé, ce qui permet au module à formater de répéter ce traitement autant de fois que c'est nécessaire.

Les considérations suivantes permettront de bien préciser la terminologie utilisée et le domaine auquel s'applique la présente invention.

Lorsqu'un objet de mise en page requis a été trouvé dans la structure de mise en page spécifique déjà existante ou a été créé, il est appelé objet de mise en page courant et le flux d'informations auquel il appartient est appelé flux d'informations courant. De manière générale, la structure logique est traitée jusqu'à ce qu'un autre objet de mise en page doive être cherché. La recherche est alors effectuée en avant de l'objet de mise en page courant à l'intérieur du flux d'informations concerné.

L'analyse de la structure est selon l'invention basée sur le principe de la récursivité. Le module à formater est subdivisé en sous-modules. Parmi ces sous-modules, certains sont spécifiquement prévus pour la mise en oeuvre du procédé de mise en page du document, ainsi et principalement un premier sous-module récursif dit sous-module logique permet d'effectuer la lecture des objets logiques jusqu'à accéder à la structure de mise en page. Egalement deux sous-modules récursifs appelés sous-modules de mise en page qui permettent d'analyser les objets de mise en page jusqu'à ce que celui qui est requis soit trouvé. Ainsi, le premier sous-module de mise en page cherche un objet de mise en page dans un ensemble d'objets de mise en page donné. Il est récursif et est appelé par le second sous-module de mise en page. Le second est appelé par le sous-module logique, il s'intéresse à l'objet de mise en page courant contenu dans le flux d'informations courant et appelle le premier sous-module de mise en page pour chercher à l'intérieur de l'ensemble des objets de mise en page. Si la recherche n'aboutit pas, il s'appelle lui-même pour chercher l'objet de mise en page courant hiérarchiquement supérieur, et ainsi de suite ... .

La fonction récursive "Makelayout" (explicitée dans la suite) est mise en oeuvre par le sous-module logique qui appelle la fonction récursive "Give object ext" mise en oeuvre par le second sous-module de mise en page qui appelle à son tour la fonction récursive "Give object kernel" mise en oeuvre par le premier sous-module de mise en page. Ainsi, il y a emboîtement des différents sous-modules récursifs.

Le traitement de catégories de mise en page implique un examen des différents flux d'informations de mise en page, ce qui signfie que durant l'application du procédé de mise en page plusieurs positions de mise en page courantes sont considérées, chacune correspondant à un flux d'informations de mise en page. Pour formater un objet logique, l'objet de mise en page correspondant doit être inséré dans la structure de mise en page à partir de la position courante du flux d'informations considéré.

Le mécanisme est basé sur une table de structures dans laquelle sont stockés, pour chaque flux d'informations de mise en page, la position de mise en page courante, le bloc précédent et la catégorie de mise en page correspondante. Les différentes positions de mise en page courantes doivent être considérées si un objet de mise en page doit être cherché dans la structure de mise en page, et ceci requis par des directives de mise en page, ou lorsqu'un bloc doit être créé. Dans ces deux cas, la question suivante se pose : à partir de quelle position l'objet de mise en page désiré doit-il être cherché ? Celle-ci est fixée conformément aux catégories de mise en page impliquées. Lorsque l'objet de mise en page courant à considérer est identifié, le procédé de mise en page est appliqué simplement jusqu'à ce qu'une autre catégorie de mise en page soit considérée. En fait, tout au long du procédé de mise en page la position de mise en page courante et la position de mise en page courante à l'intérieur du flux d'informations de mise en page (stockée dans la table de structures) sont identifiées.

Quand une catégorie de mise en page doit être considérée, la nouvelle position de mise en page courante doit être calculée conformément à la position de mise en page courante dans le flux d'informations de mise en page adéquat. Si la catégorie de mise en page n'est pas présente dans la table de structures, une nouvelle entrée est créée dans la table pour cette catégorie de mise en page et sa position courante correspondante est placée à la valeur de l'identificateur de l'objet de mise en page courante. La position courante stockée pour le flux d'informations de mise en page concerné devient la position de mise en page courante. Les flux d'informations de mise en page sont identifiés par un nombre correspondant à leur place dans la table de structures. La position courante de chaque flux d'informations de mise en page doit être remise à jour lorsque c'est nécessaire, ce qui est réalisé dans deux cas différents : quand un nouvel objet logique est analysé et quand un bloc est créé.

Chaque fois qu'un objet logique est analysé, les styles de mise en page (si il y en a) et les styles de mise en pages de sa classe (si il y en a) sont lus. Toutes les catégories de mise en page impliquées, conformément au standard ODA, sont réunies (si l'objet logique est un objet basique une seule catégorie est impliquée). Dans la plupart des cas, le flux d'informations de mise en page le plus avancé est identifié et tous les autres flux de mise en page impliqués sont synchronisés au plus avancé, c'est-à-dire que leurs positions de mise en page courante sont fixées à la position du plus avancé.

Egalement, lorsqu'un bloc est créé, la position de mise en page courante du flux d'informations de mise en page courant est fixée au bloc.

La recherche des objets de mise en page est effectuée en avant dans la structure de mise en page spécifique à partir de l'objet courant (dans le flux d'informations courant). Durant cette recherche, les objets de mise en page sont vérifiés et fermés si possible. Ceci permet au procédé selon l'invention d'être exécuté en une passe. Lorsqu'un objet de mise en page est fermé, il est figé, rien ne peut lui être ajouté ou retranché, sauf dans le cas d'un retour en arrière (opération de "backtracking" explicitée dans la suite). Ses dimensions définitives sont fixées au cours de la procédure de fermeture.

Pendant une recherche d'objet de mise en page, un objet de mise en page est fermé (correspondant à l'objet de mise en page courant d'un flux d'informations de mise en page courant ou du précédent) lorsque cet objet ne remplit pas les caractéristiques requises et qu'il ne peut être utilisé pour un flux d'informations de mise en page. Ceci correspond aux cas suivants :
- un bloc est terminé, c'est le cas lorsqu'un bloc est plein, également quand un autre bloc du même flux d'informations de mise en page doit être créé pour formater un nouvel objet logique,
- un objet de mise en page est complet ou terminé, c'est le cas lorsqu'un nouveau cadre avec une position variable doit être positionné à l'intérieur de la page et qu'il y a un cadre précédent de même père de même ordre, le cadre de même père est fermé, également quand un objet de mise en page est complet lorsqu'il n'y a plus de place pour y mettre encore du contenu,
- un objet de mise en page a une classe correspondant à une directive de mise en page du type "classe d'objet de mise en page" s'appliquant à un objet logique qui a été entièrement formaté,
- synchronisation de flux d'informations de mise en page lorsque une position 'courante de flux d'informations de mise en page est déplacée vers l'avant,
- à la fin du procédé de mise en page, quand les objets de mise en page déjà ouverts doivent être fermés.

Dans le seul cas où il est nécessaire de retourner en arrière (opération de "backtracking") dans la structure de mise en page un ou plusieurs objets de mise en page peuvent être supprimés. En effet, durant l'application du procédé de mise en page, il peut être nécessaire de revenir sur certaines parties du document déjà formatées parce que, par exemple, il est découvert dans la suite certaines directives de mise en page non respectées. Or, il n'y a aucun moyen de détecter un tel problème avant qu'il n'apparaisse.

Ainsi, un objet de mise en page peut avoir 'été créé et correctement rempli mais une étape subséquente dans le processus implique de revenir en arrière vers cet objet et de le modifier. Trois cas peuvent se présenter. Dans le premier cas, il reste encore une partie de contenu à formater dans cet objet de mise en page, par exemple :
- l'objet logique contient une directive d'indivisibilité et l'objet de mise en page n'est pas assez grand pour contenir la. totalité du contenu de l'objet logique,
- le contenu de l'objet logique est un graphique (par conséquent, le contenu est indivisible) et l'objet de mise en page n'est pas assez grand pour le recevoir intégralement,
- l'objet logique comporte une directive de mise en page du type "classe d'objets de mise en page" et l'objet de mise en page n'est pas assez grand pour contenir la totalité du contenu de l'objet logique.
- l'objet logique comporte un attribut de présentation imposant la "taille d'une partie orpheline" (séparation par exemple dans un paragraphe en bas de page) et l'objet de mise en page n'est pas assez grand pour contenir le nombre de lignes imposées par cet attribut.
- l'objet logique comporte les attributs de présentation imposant la "taille d'une partie orpheline" et la "taille d'une partie veuve" (partie d'un objet, par exemple, d'un paragraphe se retrouvant en haut de page), tandis qu'il est alors formaté sur deux pages, mais il n'est pas possible de se conformer en même temps à la "taille de la partie orpheline" de la première page et à la "taille de la partie veuve" de la seconde page. Par conséquent, la totalité de l'objet doit être déplacée vers la seconde page.

Dans le second cas, il n'y a plus de contenu pour l'objet logique courant à mettre en page dans l'objet de mise en page, mais le traitement du prochain objet logique implique des objets de mise en page précédents, par exemple :
- une disposition de mise en page du type "même objet de mise en page" s'applique à l'objet logique et ne peut être satisfaite sans modifier la mise en page de l'objet logique précédent.
- il n'y a pas assez de place pour mettre en page une note de bas de page dans le cadre prévu pour ce type de note.
- il n'y a pas d'autres objets logiques, le document est totalement mis en page mais la structure de mise en page spécifique est incorrecte.

Enfin, dans le troisième cas, l'objet de mise en page courant est prêt d'être fermé mais doit être modifié pour les raisons suivantes :
- l'objet concerne un cadre dans lequel plusieurs colonnes doivent être équilibrées, les objets subordonnés (colonnes) doivent avoir la même dimension verticale, si ce n 'est pas le cas, une partie du contenu doit être déplacée.
- l'objet concerne un cadre multicolonne et un cadre pour note de bas de page de même parenté, les dimensions verticales des colonnes doivent être modifiées par exemple pour laisser suffisamment de place pour la note de bas de page.

En outre, certains objets peuvent être supprimés lors de la procédure de leur fermeture, si le contenu est vide (objet non utilisé) ou lors du retour en arrière (opération de "backtracking" pour un objet non approprié.

De manière préventive, un mécanisme spécifique est mis en oeuvre pour éviter au processus de retour en arrière un bouclage sur une directive impossible à satisfaire. Lorsque le processus de retour en arrière est lancé, la directive de mise en page ainsi que l'objet logique impliquant ce processus sont stockés dans un registre (une pile). Quand un objet logique qui implique un tel processus a été traité (même sans succès ), la pile est décrémentée.

Avant de lancer un processus de retour en arrière, le sommet de la pile est testé. Si il contient déjà la directive de mise en page et l'objet logique pour lesquels le processus doit être lancé, la directive de mise en page est ignorée et une alarme est produite.

Le principe du processus de retour en arrière est remarquable en ce que :
- la première étape consiste en une recherche par les sous-modules de mise en page et des objets de mise en page à déplacer et des objets logiques correspondants ou vice-versa (selon le cas), la correspondance étant réalisée en utilisant les parties de contenu qui sont le seul lien entré la structure de mise en page et la structure logique,
- la seconde étape consiste en une recherche de l'objet à reformater hiérarchiquement supérieur et commun à tous les objets logiques concernés par le processus, ledit objet étant repéré et ainsi de suite pour chaque niveau hiérarchique le premier objet impliqué par le processus étant repéré,
- la troisième étape consiste à déplacer les objets de mise en page ainsi que les parties de contenu concernés,
- la quatrième étape consiste en un dialogue entre les sous-modules de mise en page qui envoient un message d'erreur au sous-module logique (mettant en oeuvre la fonction récursive "Makelayout") qui traite chaque objet logique et qui vérifie si l'objet logique concerné est repéré, si celui-ci est repéré il le reformate ainsi que tous les objets subordonnés à reformater (tous ceux qui sont repérés), sinon il retourne un message d'erreur.

Généralement le processus de retour en arrière est impliqué par les directives de mise en page. Mais il existe un cas particulier : lorsqu'un objet logique est mis en page sur deux pages et que sa valeur d'attribut de présentation de type "veuve" oblige à déplacer la totalité du contenu du premier bloc de la première page à la seconde page. Ce cas est exploré par le procédé de mise en page du contenu qui retourne l'information au sous-module logique appliquant le procédé de mise en page du document. Dans ce cas, le processus de retour en arrière est commandé par le sous-module logiqe et non par les sous-modules de mise en page.

Dans le procédé selon l'invention, un objet de mise en page non obligatoire peut être créé sans directive. C'est le cas lorsque des objets provenant de l'attribut "générateur d'objets subordonnés" et contenant une expression avec un terme optionnel, optionnel répétitif ou de choix, doivent ou non être créés quand cela n'est pas requis par une directive de mise en page. Par exemple, lors de l'application du procédé de mise en page, un bloc est nécessaire pour mettre en page le contenu d'un objet logique alors qu'aucune contrainte ou directive de mise en page ne s'applique à cet objet, mais le prochain objet dans la structure de' mise en page est un terme optionnel, optionnel répétitif ou de choix. Selon le cas, la procédure est différente.

Dans le cas d'un terme de choix, en l'absence d'une directive de mise en page, le choix par défaut consiste à opter pour le premier élément.

Dans le cas d'un terme optionnel répétitif, en l'absence d'une directive de mise en page, un objet optionnel répétitif peut être créé par apport d'une fraction de contenu. Chaque fois qu'un espace est demandé pour mettre en page une fraction du contenu, cet objet peut être créé (répété).

Dans le cas d'un terme optionnel deux interprétations sont possibles. Il est possible d'interpréter un terme optionnel comme un objet qui doit être créé seulement s'il est requis par une directive de mise en page. Sinon, un terme optionnel peut être interprété comme un objet à créer lorsque le module à formater a besoin d'un espace pour mettre en page une fraction du contenu.

La première interprétation permet de créer un objet optionnel seulement si une directive de mise en page le requiert. La seconde interprétation permet de créer un tel objet lorsqu'un espace est demandé pour une fraction du contenu. Ces deux interprétations sont incompatibles. Pour lever cette ambiguïté, il a été décidé :
- de créer un objet optionnel seulement par une directive de mise en page si cet objet est le premier d'une séquence.
- de créer un objet optionnel par fraction du contenu dans les autres cas.

Les différentes fonctions appliquées au procédé de mise en page du document et au procédé de mise en page du contenu seront décrites ci-après.

De manière préliminaire et pour résumer le fonctionnement du module à formater ODA mettant en oeuvre lesdits procédés, les phases essentielles suivantes sont rappellées.

Dans une première phase dite d'initialisations et de contrôles, le module à formater FOR effectue l'ouverture du document ODA à traiter. Dans une seconde phase, il crée la racine de mise en page spécifique et fixe d'une part l'objet logique courant comme étant la racine logique et d'autre part l'objet de mise en page courant comme étant la racine de mise en page. La troisième phase correspond au formatage de l'objet logique courant réalisé par la fonction récursive "Makelayout ". Puis, dans une quatrième phase, le module FOR supprime les objets de mise en page non utilisés (vides), vérifie que les objets de mise en page encore ouverts sont conformes (par exemple si le contenu dans un cadre multicolonne équilibrée est réellement équilibré ...) et les ferme en leur donnant leurs vraies dimensions, sinon commence un retour en arrière ( "backtracking" ) pour reformater les objets logiques non conformes, puis ferme le document retraité et formaté.

Le procédé de mise en page du document utilise principalement les fonctions récursives "Makelayout" (mise en oeuvre par le sous-module logique), "Give object ext" et "Give object kernel" (mises en oeuvre par les sous-modules de mise en page).

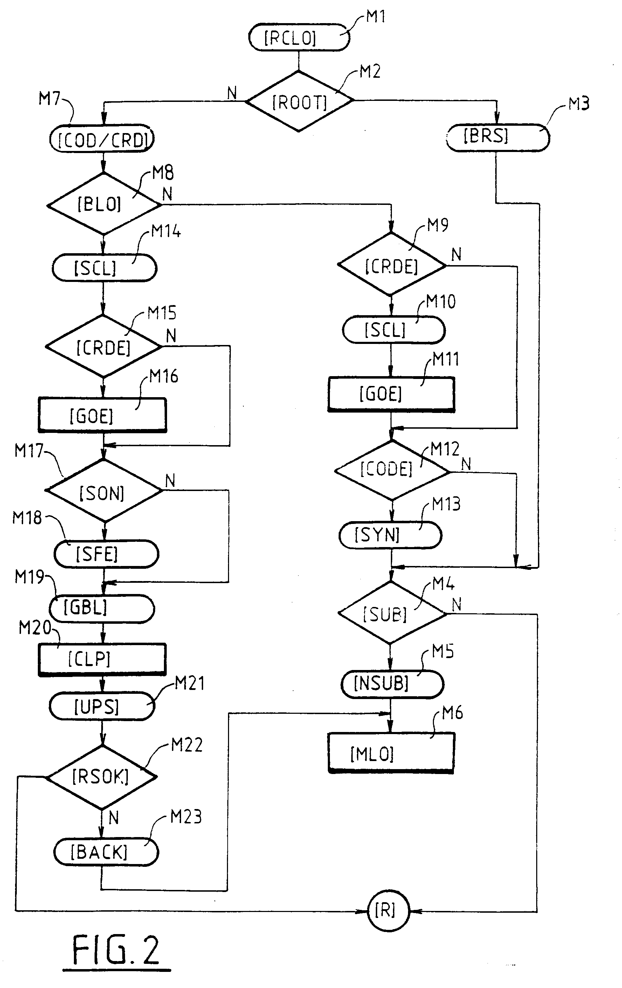

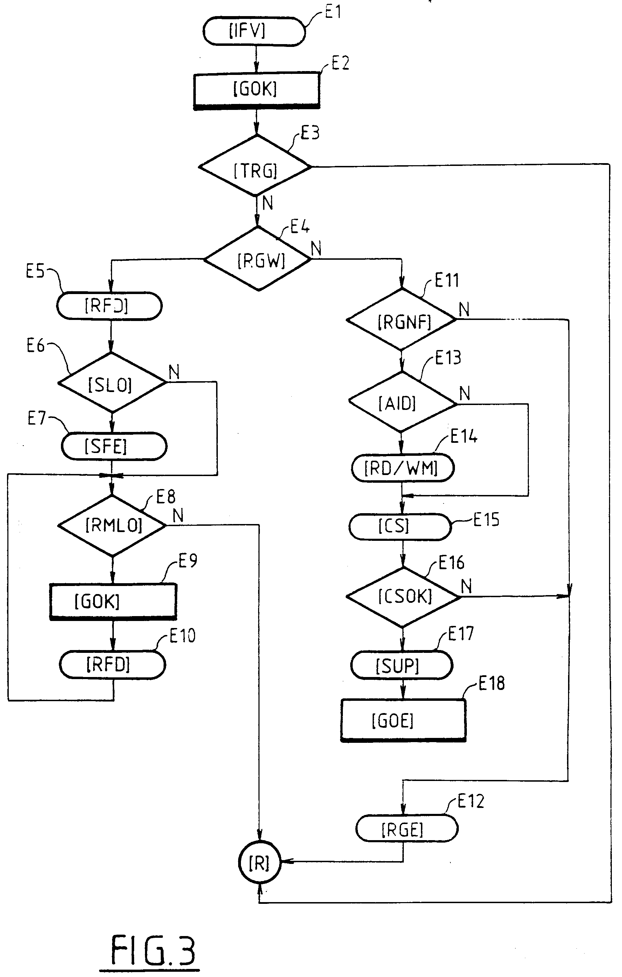

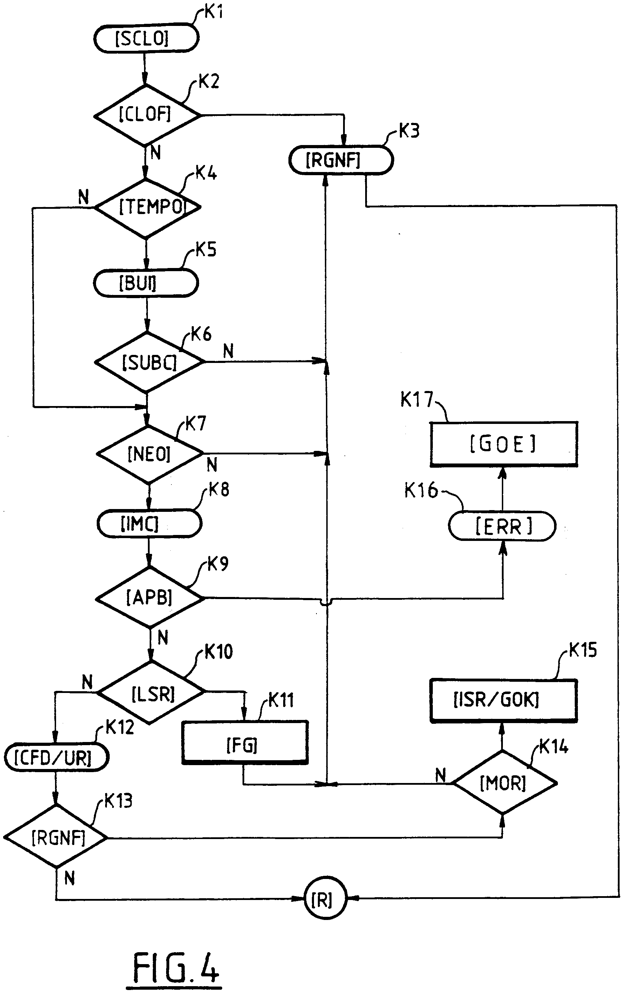

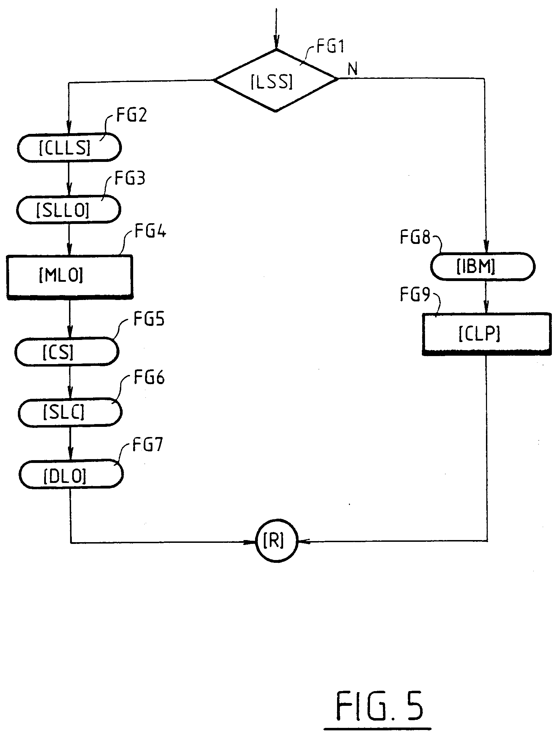

Sur la figure 2 est proposé un schéma représentant les différentes étapes parcourues par la fonction récursive "Makelayout". Cette fonction "Makelayout" permet de créer un objet ou 'un ensemble d'objets de mise en page pour formater l'objet logique courant. Sa fonction consiste à lire l'objet logique et à appeler d'autres fonctions de mise en page lorsque c'est nécessaire, quand il existe des directives de mise en page ou un objet logique basique (non composite), puis à s'appeler elle-même pour lire les objets logiques subordonnés, construisant ainsi la structure de mise en page. Elle constitue la procédure principale du procédé de mise en page du document et est basée sur l'analyse récursive de la structure logique spécifique à partir de la racine logique.

Ainsi la première étape M1 correspond à la lecture de l'object logique courant [RCL0] et en particulier du type d'objet. En effet, le traitement appliqué dépend du type d'objet logique lu : racine logique, objet composite ou objet basique.

A la seconde étape M2, la question suivante est posée : "L'objet logique courant est-il une racine logique ?" [ROOT]. Si la réponse est oui, la troisième étape M3 est la création de l'embryon de la structure de mise en page [BRS], ce qui signifie que conformément à la structure de mise en page générique, il est créé autant d'objets de mise en page que possible dans la structure formant ledit embryon.

Tous les objets requis, c'est-à-dire sans terme optionnel, optionnel répétitif ou de choix sont créés, alors que chaque fois qu'un terme optionnel, optionnel répétitif ou de choix est rencontré un objet de mise en page temporaire est créé et inséré dans la structure de mise en page. Il est indiqué qu'à cette position, un objet (ou un ensemble d'objets) de mise en page potentiel sera créé plus tard si une directive de mise en page ou une fraction de contenu le requiert. Puis, à la quatrième étape M4, est posée la question : "Y-a-t-il des objets subordonnés ?" [SUB]. Si la réponse est non, il y a retour [R] à la fonction "Makelayout". Si la réponse est oui, il y a passage à l'étape M5 dans laquelle le prochain objet subordonné [NSUB] devient l'objet logique courant, puis à l'étape M6 qui correspond au retour à la fonction "Makelayout" [MLO] qui s'appelle elle-même, et ainsi de suite. Si, par contre, à l'étape M2 la réponse est non, l'objet logique courant est alors soit un objet composite soit un objet basique et l'étape suivante est M7 dans laquelle les directives s'appliquant à l'objet logique concerné sont discriminées et séparées en directives de contraintes et directives de création [COD/CRD]. A l'étape suivante M8 est posée une question : "L'objet logique est-il un objet basique ?" [BLO]. Si la réponse est non c'est donc un objet composite et une autre question est posée à l'étape M9 : "Existe-t-il des directives de création ?" [CRDE]. Un objet de mise en page conforme aux diverses directives est cherché à partir de la position de mise en page courante vers l'avant. Ainsi, si la réponse à M9 est oui, l'étape suivante M10 consiste en une recherche du flux d'informations de mise en page courant pour déterminer l'objet de mise en page courant dans ledit flux d'informations [SCL]. Puis à l'étape M11 la fonction récursive "Give object ext" (décrite avec la figure 3) est appelée [GOE] pour permettre la recherche et la construction de l'objet de mise en page pertinent à partir de l'objet courant. L'étape suivante M12 consiste à poser la question "Existe-t-il des directives de contraintes ?" [CODE]. Lorsque la réponse est positive, au cours de l'étape M13 suivante tous les flux d'informations concernés sont synchronisés ([SYN]. L'étape suivante est de nouveau l'étape M4 relative à la détermination des objets subordonnés. Si à l'étape M9 la réponse est non, c'est-à-dire qu'il n'existe pas pour l'objet composite concerné de directives de création, alors il y a saut à l'étape M12 déterminant si des directives de contrainte existent, s'il en existe, les étapes M13, M14, ..., sont parcourues. Si la réponse est négative à l'étape M12, il y a saut à l'étape M14.

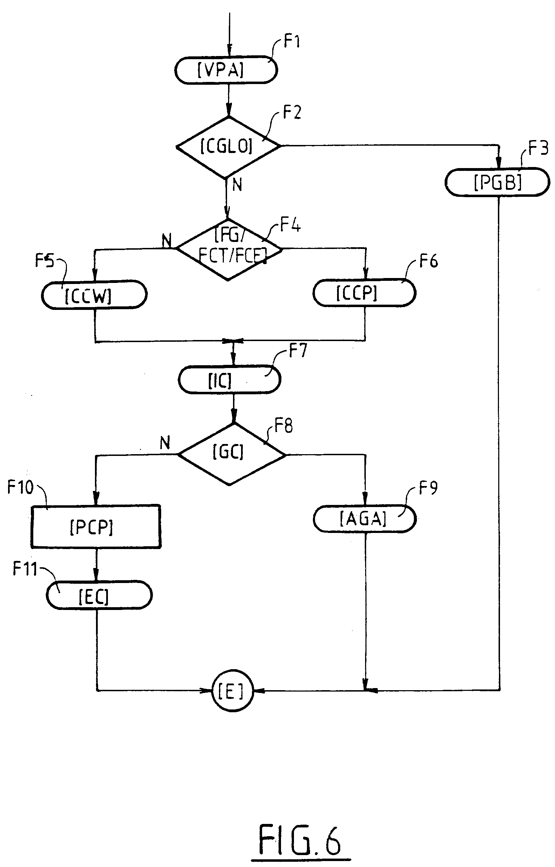

En outre, si la réponse à l'étape M8 est oui, l'objet logique est donc un objet basique et l'étape suivante M14 est équivalente à l'étape M10, ce qui signifie qu'une recherche du flux d'informations de mise en page courant est effectuée pour déterminer l'objet de mise en page courant dans ce flux [SCL]. L'étape suivante M15 consiste en la question : "Existe-t-il des directives de création ?" [CRDE]. S'il en existe, l'étape M16 qui suit est identique à l'étape M11 et la fonction récursive "Give object ext" est appelée [GOE] pour permettre la recherche et la construction de l'objet de mise en page pertinent à partir de l'objet courant. A l'étape M17 une question est également posée : "un objet hiérarchiquement supérieur est-il nécessaire ?" [SON]. A une réponse positive correspondant l'étape M18 au cours de laquelle une recherche d'un objet hiérarchiquement supérieur est effectuée [SFE] puis l'étape M19 où un bloc est créé, positionné et la zone éditable disponible calculée [GBL]. Enfin, à l'étape M20, le procédé de mise en page du contenu est appelé [CLP] par l'intermédiaire de la fonction "Fillblock" (décrite avec la figure 6) pour la mise en page du contenu.

D'autre part, si à la question posée à l'étape M15 concernant l'existence de directives de création, la réponse est non, il y a saut à la question posée à l'étape M17 relative à la nécessité de trouver un objet hiérarchiquement supérieur puis passage aux étapes M18, M19, M20, ... . Une réponse négative à la question posée à l'étape M17 implique un saut à l'étape M19 puis M20, ... .

Une fois que le contenu a été mis en page par application du procédé de mise en page du contenu à l'étape M20, il y a retour au procédé de mise en page du document et en particulier à la fonction "Makelayout" où l'état de la mise en page est rapporté. L'étape M21 assure la remise à jour de la taille des objets apparentés [UPS]. A l'étape M22 est posée la question : "L'état de la mise en page rapporté à la fin de l'étape M20 est-il correct ?" [RSOK]. Si la réponse est oui, cela signifie qu'il y avait assez de place pour effectuer la mise en page, il y a alors retour [R] à la fonction "Makelayout". Si la réponse est négative, c'est-à-dire qu'il n'y avait pas assez de place, l'étape M23 permet de débuter une opération de retour en arrière ("backtracking") dans laquelle l'objet logique courant devient l'objet déterminé lors du retour en arrière puis il y a retour à la fonction "Makelayout" [MLO] de l'étape M6.

Pour résumer, il faut garder en mémoire qu'un objet de mise en page conforme aux diverses directives est cherché à partir de la position de mise en page courante vers l'avant. Si un objet requis est hiérarchiquement supérieur à l'object courant, les objets de mise en page dans le flux d'informations sont fermés, ce qui signifie que leurs dimensions finales leur sont données et que rien d'autre ne sera ajouté ou retiré sauf dans le cas d'une opération de retour en arrière ("backtracking"), l'objet de mise en page courant est alors l'objet hiérarchiquement supérieur et ainsi de suite jusqu'à ce qu'un objet hiérarchiquement supérieur à l'objet requis soit trouvé.

La recherche permet d'examiner un ensemble d'objets courants jusqu'à ce qu'un objet pertinent ou un objet temporaire soit trouvé. Dans ce cas, la compatibilité entre l'objet temporaire et les directives de mise en page est testée. S'il y a conformité, un nouvel ensemble d'objets est construit. Si aucun objet n'est trouvé dans l'ensemble d'objets courants, les objets sont fermés, l'objet de mise en page courant est l'objet hiérarchiquement supérieur et la recherche permet d'examiner un nouvel ensemble d'objets, et ainsi de suite.

Les positions et les dimensions maximales utilisables sont données aux nouveaux objets de mise en page, et la zone éditable disponible est recalculée. Lorsque l'objet courant est un objet logique composite, l'objet logique courant devient le prochain objet et celui-ci est formaté. Si l'objet courant est un objet basique, un bloc est créé, ses positions et dimensions maximales sont déterminées et la zone éditable disponible recalculée. Le procédé de mise en page du contenu est alors appelé pour effectuer la mise en page du contenu. L'état de la mise en page retourné par le procédé de mise en page du contenu est analysé. Si le résultat retourné est correct les dimensions du bloc sont remises à jour, la zone éditable disponible recalculée. L'objet logique courant devient le prochain objet et celui-ci est formaté. Si, par contre, il n'y a pas assez de place, une opération de retour en arrière est effectuée, c'est-à-dire un reformatage à partir du même objet logique ou à partir du précédent est pratiqué en tenant compte des contraintes imposées. L'object logique courant devient l'objet choisi lors de retour en arrière et celui-ci est formaté. Si, en outre une erreur apparaît, un message d'erreur est envoyé. Ce processus est employé jusqu'à ce qu'il n'y ait plus d'objets logiques à traiter.

Sur la figure 3 est proposé un schéma représentant les différentes étapes parcourues par la fonction récursive "Give object ext". Cette fonction est appelée par la fonction "Makelayout" mais peut également s'appeler elle-même. Elle a pour but de chercher ou de créer (quand c'est possible) certains objets de mise en page à partir de l'objet de mise en page courant dans la structure de mise en page, objets de mise en page conformes aux directives spécifiées. Pour cela, elle appelle la fonction récursive "Give object kernel" (décrite avec la figure 4) qui cherche dans un ensemble d'objets de mise en page courants, parmi leurs subordonnés. En cas de conflit ou d'incompatibilité avec une directive de mise en page, la fonction "Give object ext" décide d'ignorer cette dernière ou de lancer une opération de retour en arrière ("backtracking"). Si aucun objet de mise en page pertinent n'est trouvé, elle s'appelle elle-même pour relancer le même processus pour l'objet de mise en page courant hiérarchiquement supérieur, et ainsi de suite, d'un ensemble d'objets de mise en page à un autre en avançant à partir de la position courante vers l'avant.

Ainsi, la première étape E1 est prévue pour initialiser des repères (drapeaux) et des variables [IFV]. En effet, différents repères sont liés aux objets de mise en page pour renseigner sur la situation desdits objets (objet nouveau, objet terminé, objet plein, retour en arrière, etc ...), ces repères étant initialisés pendant la création de l'objet. De même sont initialisés des variables telles que celles contenues dans la table de structures. Le premier objet lié à des directives spécifiées est cherché dans les objets de la structure de mise en page spécifique. La fonction récursive "Give object kernel" [GOK] est appelée à l'étape E2 pour chercher un objet de mise en page pertinent parmi les subordonnés de l'objet de mise en page courant. A l'étape E3, le retour à la fonction récursive "Give object ext" est effectuée et la table de structures est testée, chaque index de la table de structures correspond à une directive de mise en page, le premier donne le résultat global de la recherche qui est le résultat du test [TRG] de l'étape E3. Si le résultat du test est correct, ce qui signifie que toutes les directives requises sont satisfaites alors il y a retour [R] à la fonction "Give object ext". Sinon, la prochaine étape E4 correspond à la question : "Le résultat global contient-il une alarme ?" [RGW]. Si la réponse est oui, cela signifie que les directives requises ne sont pas satisfaites dans leur intégralité mais seulement en partie et l'étape E5 permet d'extraire les directives trouvées satisfaisantes [RFD]. L'étape E6 pose la question : "Existe-t-il une directive qui requiert un objet de mise en page hiérarchiquement supérieur à l'objet de mise en page courant ?" [SLO]. Si la réponse est positive, l'étape E7 correspond à une recherche d'un objet hiérarchiquement supérieur à l'objet de mise en page courant [SFE]. Puis l'étape E8 permet de poser une nouvelle question : "Existe-t-il une directive qui requiert un objet de mise en page hiérarchiquement inférieur à l'objet de mise en page courant ?" [RMLO]. Une réponse positive entraîne d'abord l'étape E9 pour laquelle la fonction récursive "Give object kernel" [GOK] est de nouveau appelée pour chercher un objet de mise en page pertinent parmi les subordonnés de l'objet de mise en page courant. Ensuite, il y a retour à la fonction récursive "Give object ext" et passage à l'étape E10 qui permet d'extraire les directives trouvées satisfaisantes [RFD] et enfin il y a retour à l'étape E8 et ceci jusqu'à ce qu'il n'y ait plus de directive exigeant un objet de mise en page hiérarchiquement inférieur à l'objet de mise en page courant. Lorsqu'il n'y a plus de directive de ce type, la réponse à la question posée à l'étape E8 est négative et il y a alors retour [R] à la fonction "Give object ext". En outre, si à l'étape E6 il n'est pas trouvé de directive exigeant un objet de mise en page hiérarchiquement supérieur à l'objet de mise en page courant il y a saut à l'étape E8, puis soit aux étapes E9, E10, E8 ... soit retour [R] à la fonction "Give object ext".

D'autre part, si une réponse négative est faite à la question de l'étape E4 demandant si le résultat global contient une alarme alors que le résultat du test de l'étape E3 n'était pas correct, alors une telle réponse entraîne un passage à l'étape E11. A cette étape E11 est posée la question suivante :"N'a-t-il été trouvé aucune directive satisfaite dans le résultat global?" (RGNF). Ce test permet de traiter les interférences ou conflits entre différentes directives de mise en page. Si la réponse à cette question est non, cela signifie qu'il n'a peut être pas été trouvé de directive satisfaite, mais qu'il y a une impossibilité à formater l'objet immédiatement parce qu'il y a une erreur ; par exemple l'objet est indivisible et il n'y a plus assez de place pour le placer dans une même page. Dans ce cas, le résultat global montre qu'il y a une erreur [RGE], l'étape E12 pendant laquelle un processus de retour en arrière ("backtracking") est également lancé. Puis, il y a retour [R] à la fonction "Give object ext". Par contre, si la réponse à la question [GNF] de l'étape E11 est positive, cela signifie qu'il n'a été trouvé aucune directive satisfaite mais qu'il existe des directives en conflit ou incompatibles avec l'analyse effectuée et que par conséquent aucun objet n'est pertinent parmi l'ensemble d'objets analysé. Dans cette hypothèse, la prochaine étape E13 pose la question suivante : "Y-a-t-il une quelconque directive qui soit incompatible avec l'analyse effectuée ?" [AID]. Si c'est le cas, le passage à l'étape E14 implique que cette directive soit omise et un message d'alarme est émis [RD/WM]. Pendant l'étape E15 suivante, un test de la structure [CS] permet de vérifier et de fermer les objets terminés. Ce test de la structure est également effectué lorsque la réponse à la question [AID] de l'étape E13 est négative, c'est-à-dire qu'il n'existe pas de directive qui soit incompatible avec l'analyse en cours. A la suite du test [CS], la question suivante est posée à l'étape E16 : "Le résultat du test de la structure est-il correct ?" [CSOK]. Une réponse négative impose d'abord un saut à l'étape E12, le résultat global montrant une erreur et un processus de retour en arrière étant alors lancé, puis un retour [R] à la fonction "Give object ext". Une réponse affirmative à la question [CSOK] de l'étape E16 produit le passage à l'étape E17 pendant laquelle l'objet hiérarchiquement supérieur est choisi pour devenir l'objet de mise en page courant [SUP], puis l'étape E18 correspond au retour à la fonction "Give object ext" [GOE] qui s'appelle elle-même pour relancer le processus pour cet objet de mise en page hiérarchiquement supérieur, et ainsi de suite.

Sur la figure 4 est proposé un schéma représentant les différentes étapes parcourues par la fonction récursive "Give object kernel". Cette fonction est appelée pour tester si l'objet de mise en page donné satisfait aux directives et mettre à jour le tableau de structures et l'objet de mise en page courant. Lorsque l'objet de mise en page est un objet temporaire, elle permet de construire l'ensemble d'objets de mise en page correspondant. De manière remarquable, elle effectue une recherche du premier objet ayant des directives spécifiées dans l'ensemble d'objets de mise en page courant. Simultanément, elle calcule la taille, positionne l'ensemble d'objets de mise en page courant et formate les contenus génériques. Les règles opératoires utilisées par la présente fonction sont les suivantes :
- si un objet est terminé, elle retourne un message précisant que les directives de mise en page n'ont pas été trouvées.
- Elle analyse l'objet de mise en page courant, dans le cas d'un objet temporaire ; si celui-ci n'a jamais été évalué, elle l'évalue, dans le cas d'un objet requis elle cherche les directives de mise en page et une fois trouvées elle retourne un message précisant que celles-ci sont trouvées.
- Elle s'appelle elle-même pour traiter les objets subordonnés jusqu'à ce que l'objet désiré soit trouvé ou qu'il n'y ait plus d'objets subordonnés.

Ainsi la première étape K1 consiste à sauvegarder l'objet qui devient l'objet de mise en page courant [SCLO]. Une question est posée à la seconde étape K2 : "L'objet de mise en page courant est-il terminé ou complet" ? [CLOF]. Si la réponse est oui, c'est l'étape K3 au cours de laquelle l'objet de mise en page courant est sauvegardé et un message est retourné au résultat global précisant que les directives de mise en page n'ont pas été trouvées [RGNF]. Puis, il y a retour [R] à la fonction "Give object kernel". Si l'objet de mise en page courant n'est ni terminé, ni complet, la réponse à la question de l'étape K2 est donc négative et l'étape suivante est K4 qui pose une seconde question : "L'objet de mise en page courant est-il un objet temporaire [TEMPO]. Une réponse positive entraîne l'étape K5 pendant laquelle l'ensemble d'objets de mise en page est construit au fur et à mesure, satisfaisant aux directives de mise en page [BUI]. Puis l'étape K6 concerne une nouvelle question : "L'ensemble d'objets de mise en page a-t-il été créé ?" [SUBC]. Une réponse négative entraîne un retour à l'étape K3 avec retour d'un message précisant que les directives de mise en page n'ont pas été trouvées, alors qu'une réponse affirmative conduit à l'étape K7 où la question suivante est posée : "La recherche concerne-t-elle un nouvel objet ?" [NEO]. De même, si à la question posée à l'étape K4 la réponse est non, c'est-à-dire que l'objet de mise en page courant n'est pas un objet temporaire, un saut est provoqué à l'étape K7 pour tester si l'object de mise en page courant est un nouvel objet. Lorsque l'objet concerné n'est pas un nouvel objet il y a retour à l'étape K3. Si, par contre, la recherche porte sur un nouvel objet, la position, la dimension et la taille de cet objet de mise en page sont initialisées et les objets apparentés sont mis à jour [IMC] au cours de l'étape K8. Puis une nouvelle question est posée à l'étape K9 : "Existe-t-il un quelconque problème concernant la recherche des directives ?" [APB]. Si il n'y a pas de problème, l'étape suivante est K10, au cours de laquelle une autre question est posée : "L'attribut "source logique" s'applique-t-il ou, est-il fait référence à une description de classe d'objets d'un document externe au document actuellement traité ?" [LSR]. Effectivement, l'attribut "source logique" est spécifié pour une classe d'objets de mise en page si le contenu associé à chacun des objets de mise en page de cette classe doit être fourni par une classe d'objets logiques, par exemple, le'contenu associé à un cadre de haut ou de bas de page sur une page. Cet attribut permet alors d'identifier la description de classe d'objets logiqes concernée. De même, une description de classe d'objets dans un document donné qui est en train d'être traité peut contenir une référence à une description de classe d'objets d'un document générique externe au document traité. Les attributs constituant une description de classe d'objets dans le document générique ainsi référencé peuvent fournir des valeurs pour les attributs correspondants de cette description de classe d'objets du document en train d'être traité qui se réfèrent à cette description de classe d'objets dans le document référencé. Une réponse positive à la question [LSR] de l'étape K10 entraîne l'étape K11 pour laquelle il est fait appel à la fonction "Fill Gene" [FG] (décrite avec la figure 5) qui est utilisée pour formater des contenus génériques, puis il y a retour à l'étape K3 de sauvegarde de l'objet de mise en page courant alors qu'un message est retourné précisant que les directives de mise en page n'ont pas été trouvées.

Une réponse négative à la question [LSR] de l'étape K10 par contre conduit à l'étape K12 qui permet de vérifier les directives satisfaites et de mettre à jour la table des structures [CFD/UR]. Puis à l'étape K13, le résultat global est testé : "N'a-t-il été trouvé aucune directive satisfaite dans le résultat global ?" [RGNF]. Si la réponse est non, il y a retour [R] à la fonction "Give object kernel". Si la réponse est oui, une nouvelle question est posée à l'étape K14 : "Un objet hiérarchiquement inférieur est-il requis ?" [MOR]. S'il n'est pas requis d'objet hiérarchiquement inférieur, il y a retour à l'étape K3 et un message est retourné précisant que des directives de mise en page satisfaites n'ont pas été trouvées. Si la réponse à la question de l'étape K14 est positive, il y a passage à l'étape K15 pour laquelle, si l'objet de mise en page recherché est hiérarchiquement supérieur à l'objet de mise en page courant, il est retourné un message précisant que les directives satisfaites n'ont pas été trouvées alors que pour chaque objet subordonné d'un objet de mise en page, l'objet subordonné devient l'objet de mise en page courant traité par la fonction "Give object kernel" [ISR/GOK].

Lorsque la réponse à la question [APB] de l'étape K9 est positive, c'est-à-dire qu'il se pose un problème concernant la recherche des directives (zone éditable insuffisante, retour en arrière, ... ), un message d'erreur [ERR] est retourné à l'étape K16 et il y a retour à la fonction récursive "Give object ext." [GOE], c'est l'étape K17.

La figure 5 propose le schéma représentant les différentes étapes parcourues par la fonction "Fill Gene". Cette fonction est utilisée pour formater les contenus génériques, d'une part dans le cas où s'applique un attribut "source logique" (par exemple le cas d'un cadre de haut ou de bas de page) en créant l'ensemble d'objets logiques spécifiques correspondant, puis en appelant la fonction "Makelayout" pour le formater et une fois terminé en le supprimant, d'autre part dans le cas d'une référence à une description de classe d'objets d'un document générique externe au document en cours de traitement (par exemple un bloc générique) en fixant les positions et dimensions du bloc correspondant et en appliquant le procédé de mise en page du contenu par appel de la fonction "Fillblock".

La première étape FG1 comporte la question : "L'attribut "source logique" est-il spécifié pour l'objet de mise en page courant ?" [LSS]. Une réponse positive est suivie de l'étape FG2 qui consiste à créer l'ensemble d'objets logiques spécifique correspondant [CSLS] puis de l'étape FG3 au cours de laquelle sont sauvegardés les objets logiques courants ainsi que les objets de mise en page courants [SLLO]. Puis la fonction récursive "Makelayout" [MLO] est appelée à l'étape suivante FG4 pour formater les objets logiques. A la fin de l'étape FG4, il y a retour à la fonction "Fill Gene". L'étape suivante FG5 consiste à vérifier et à fermer les objets de mise en page terminés en leur donnant leurs vraies dimensions [CS]. A l'étape FG6, les objets logiques et les objets de mise en page sauvegardés sont de nouveau considérés comme étant les objets logiques et les objets de mise en page courants [SLC]. Enfin, à l'étape FG7, l'ensemble d'objets logiques, créés précédemment et à présent terminé, est supprimé [DLO], puis il y a retour [R] à la fonction "Fill Gene".

Dans le cas où la réponse à la question [LSS] de l'étape FG1 est négative cela signifie qu'il existe une référence à une description de classe d'objets d'un document générique externe au document en cours de traitement. L'étape FG8 qui suit correspond alors à l'opération d'initialisation de la position et des dimensions du bloc [IBM] correspondant à l'objet de mise en page courant. Puis à l'étape FG9 suivante, le procédé de mise en page du contenu est appliqué [CLP] par l'intermédiaire de la fonction "Fillblock" (décrite avec la figure 6) pour le formatage du bloc concerné dont la taille est remise à jour lors du retour [R] à la fonction "Fill Gene".

Le procédé de mise en page du contenu est appliqué selon trois étapes essentielles : une première étape dite de recherche du contenu à formater, une seconde étape dite d'évaluation des attributs (styles de présentation) et une troisième étape dite de formatage du contenu.

Le procédé de mise en page du contenu utilise, entre autres, la fonction "Fillblock" qui est la procédure principale utilisée par ledit procédé. La fonction "Fillblock" est décrite au moyen de la figure 6 dans ces étapes caractéristiques, elle agit comme une interface entre le procédé de mise en page du contenu et le procédé de mise en page du document. La fonction "Fillblock" formate ou reformate tout ou partie d'une (ou plusieurs) partie(s) de contenu associée(s) à un objet logique (soit à partir de la structure logique spécifique soit temporairement produit à partir d'un attribut) dans un bloc à l'intérieur d'une zone éditable disponible de dimensions maxima. La fonction "Fillblock" vérifie si le premier paramètre reçu est relatif à un objet logique spécifique ou à un objet logique temporairement créé et, au moyen de repères (drapeaux), tient compte à tout moment du contexte propre aux directives de mise en page, au reformatage dû à une procédure de retour en arrière, à un déplacement de tout ou partie d'un contenu, les repères étant positionnés après analyse du contexte par le procédé de mise en page du document. Le contexte dépend fréquemment de la réponse de la fonction "Fillblock" à un précédent appel et également de la conformité avec les directives de mise en page.

De manière générale, le traitement d'un objet logique qui est associé à une pluralité d'objets subordonnés est réalisé comme suit. Un bloc désigne une unique partie de contenu formatée sauf lorsqu'une concaténation est prévue. Si un objet logique a plus d'une partie de contenu subordonnée, cette fragmentation est la conséquence d'un formatage précédent. Le contenu de ces subordonnés retraitables sera formaté dans la même partie de contenu, dans la mesure du possible. Une "partie de contenu à écrire" est créée, lorsque c'est nécessaire, lors d'une étape du procédé dans laquelle le contenu à traiter est cherché, les attributs s'y appliquant sont évalués et la partie de contenu formatée est générée. La "partie de contenu à écrire" est associée au bloc. Le premier objet subordonné de l'objet logique à traiter est ouvert et devient "la partie de contenu à lire" courante. Le contenu de la "partie de contenu à lire" courante est formatée dans la "partie de contenu à écrire". Si le formatage de la "partie de contenu à lire" est réalisée, la "partie de contenu à lire" est retirée de la liste des subordonnés de l'objet logique puis supprimée. Egalement le prochain subordonné qui est à présent le premier dans la liste devient la "partie de contenu à lire" courante. Le traitement est répété jusqu'à ce que tous les subordonnés soient traités ou jusqu'à une interruption du formatage due à une erreur fatale ou à un manque de place dans l'objet de mise en page. Pour terminer la "partie de contenu à écrire" est ajoutée à la liste des subordonnés de l'objet logique. Par contre, lorsque le formatage est interrompu (par exemple par manque de place), la "partie de contenu à lire" reste la première dans la liste des subordonnés et n'est pas supprimée. De même, la "partie de contenu à écrire" est ajoutée à cette liste et devient la dernière de la liste. Elle contient une partie du contenu formatée de la "partie de contenu à lire".

Le procédé de mise en page du contenu ne peut créer les objets de mise en page nécessaires pour continuer le formatage. Aussi, il analyse si l'attribut "taille de l'orphelin" est satisfait et retourne les valeurs adéquates au procédé de mise en page du document.

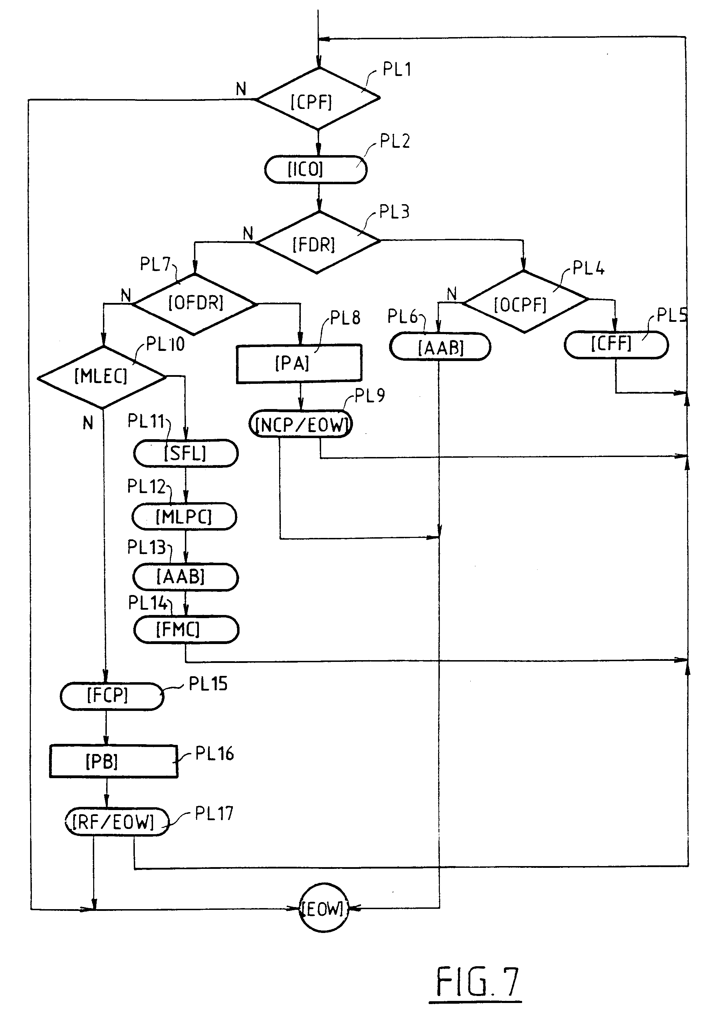

Ainsi, "Fillblock" est appelée par la fonction récursive "Makelayout (voir figure 2) et par la fonction "Fill Gene" (voir figure 5). La première étape F1 consiste à vérifier si le premier paramètre reçu [VPA] correspond à un objet logique obligatoire ou à un objet logique temporaire créé à partir de la structure générique concernant les hauts ou les bas de page. La vérification est effectuée au moyen d'un paramètre d'information qui peut prendre trois valeurs entières : une première valeur pour un objet logique spécifique, une seconde valeur pour un objet logique temporaire et une troisième valeur pour distinguer un contenu générique de mise en page. La seconde étape F2 correspond à la question suivante : "Le contenu analysé provient-il d'un objet générique de mise en page ?" [CGLO]. Si le paramètre d'information est fixé à la troisième valeur alois la réponse est oui, le contenu étant déjà formaté, la troisième étape F3 consiste à déterminer les dimensions horizontales et verticales et les positions des blocs [PGB] puis à sortir de la fonction "Fillblock" [E]. Si la réponse à la question de l'étape F2 est négative, trois autres questions alternatives sont posées à l'étape F4 : "L'objet logique actuellement traité n'est-il pas un objet traité précédemment ?" ou "Y-a-t-il un repère indiquant qu'une concaténation est requise ?" ou "Y-a-t-il un repère indiquant que le contenu à formater ne doit pas être interrompu ?" [FG/FCT/FCE] ce qui peut s'énoncer également : "Y-a-t-il des attributs récupérables ou faut-il tout recalculer ?". Si aucune de ces trois questions n'admet de réponse positive, le contexte courant associé à l'objet analysé est totalement supprimé [CCW] dans le contexte courant en mémoire, c'est l'étape F5. A l'inverse si une réponse positive est faite à l'une de ces trois questions, le contexte courant n'est que partiellement supprimé [CCP] dans le contexte courant en mémoire, c'est l'étape alternative F6. L'étape suivant soit l'étape F5, soit l'étape F6 est l'étape F7 dont l'objet est de chercher des données propres à l'object à formater (nombre d'objects subordonnés à traiter, indice du premier à traiter qui dépend du contexte, etc ... ) et de mettre en mémoire une partie des informations (champs) du contexte courant [IC]. Puis, la question suivante est posée à l'étape F8 : "Le contenu à formater est-il graphique ?" [GC]. Une réponse positive entraîne l'étape F9 qui réserve un traitement particulier qui permet d'ajuster les attributs associés au contenu graphique (nombre de lignes, dimensions verticale et horizontale) [AGA]. Comme une partie du contenu graphique ne peut être partagée, il est alors nécessaire de créer une "partie de contenu à écrire" formatée et de copier l'intégralité de l'information relative au contenu ainsi que les attributs de la "partie de contenu à lire" dans la "partie de contenu à écrire". Le terme de l'étape F9 est la sortie de la fonction "Fillblock" [E]. Si la réponse à la question posée à l'étape F8 est négative, c'est-à-dire que le contenu à formater n'est pas graphique, l'étape suivante F10 est le traitement de chaque partie de contenu [PCP] appartenant à l'objet à formater dont le détail est donné avec la description des figures 7, 8 et 9. Une fois le traitement [PCP] effectué, l'étape suivante F11 consiste à terminer le traitement de la fonction "Fillblock" en particulier en mettant à jour et en figeant pour les transmettre les informations propres à l'objet logique et aux blocs traités, aux repères, au paramètre d'information etc ..., et en fermant les objets ouverts [EC] puis à sortir de la fonction "Fillblock" [E] pour retourner à l'application du procédé de mise en page du document.

La figure 7 propose le schéma représentant la boucle de traitement [PCP] de l'étape F10 (figure 6) utilisée par la fonction "Fillblock".

Ainsi, une première question est posée dès la première étape PL1 : "Y-a-t-il une partie de contenu à formater ?" [CPF]. Une réponse négative ramène directement en sortie de boucle [EOW]. Une réponse positive conduit à l'étape PL2 au cours de laquelle le contenu à formater (ou reformater) est recherché, les attributs s'y appliquant sont estimés et les parties de contenu formatées sont générées [ICO]. Les informations (champs) du contexte courant qui n'avaient pas été considérées lors de la procédure [IC] de l'étape F7 (figure 6) sont prises en compte et le repère de contexte (drapeau) est ensuite mis à jour si cela est nécessaire. Puis au cours de l'étape suivante PL3 est posée une autre question : "Le repère de contexte indique-t-il une valeur a signalant qu'un reformatage n'est pas nécessaire ?" [FDR]. Une réponse positive à cette question entraîne une question subséquente à l'étape PL4 : " Y-a-t- il d'autres parties de contenu à formater ?" [OCPF] . Si la réponse à cette question est oui, c'est l'étape PL5, le formatage doit être continué (les objets étant partiellement formatés) et le repère de contexte est mis soit à la valeur correspondant à un jeu d'éléments de contenu appelé classe d'architecture de contenu de l'objet logique (ce qui signifie que l'objet logique contient un mélange de parties de contenu formatées et retraitables et que le formatage sera réalisé par un nouvel appel de la fonction "Fillblock") soit à la valeur correspondant au traitement de la partie de contenu suivante [CFF] puis il y a retour à l'étape PL1, PL2, ... . Si la réponse à la question [OCPF] de l'étape PL4 est négative, c'est qu'il n'y a pas de parties de contenu à traiter ce qui provoque l'étape PL6 pendant laquelle les attributs de blocs sont ajustés [AAB], c'est-à-dire que des attributs de présentation sont créés associés au bloc , les attributs différents de la valeur défaut standard sont spécifiés dans ce nouveau style de présentation. La fin de l'étape PL6 est suivie d'une sortie de la boucle [EOW].

D'autre part, si à la question [FDR] posée à l'étape PL3 la réponse est non, une nouvelle question est posée à l'étape suivante PL7 : "Le repère de contexte indique-t-il une valeur autre que celle signalant qu'un reformatage n'est pas nécessaire et qu'il n'y a pas de lignes mobiles entre deux blocs" ? [OFDR]. Le repère peut prendre dans cette hypothèse cinq valeurs différentes (b à f) correspondant aux cas suivants :
**b** : Les conditions sont normales, tout le contenu associé à un objet doit être formaté dans un bloc sans concaténation.
**c** : Une concaténation est prévue.
**d** : Le formatage doit être continué (objets dont le contenu a été partiellement formaté), le repère étant à la valeur indiquant que tout le contenu d'une partie de contenu n'a pas été formaté, et que l'attribut "taille de l'orphelin" a été satisfait ; le procédé de mise en page du contenu doit alors continuer le formatage du contenu, dans un nouveau bloc d'une nouvelle page.
**e** : Cette valeur est utilisée quand, à la suite d'un appel précédent de la fonction "Fillblock", celle-ci a signalé au procédé de mise en page du document que le contenu a été coupé . Pour deux parties de contenu successives, la première partie déjà formatée est reprise et on continue avec la seconde partie non encore formatée (exemple : objet indivisible, ou attribut "taille de l'orphelin" non respecté).
**f** : Le formatage de la partie de contenu suivante doit être effectué (exemple : objet logique ayant plusieurs parties de contenu associées).

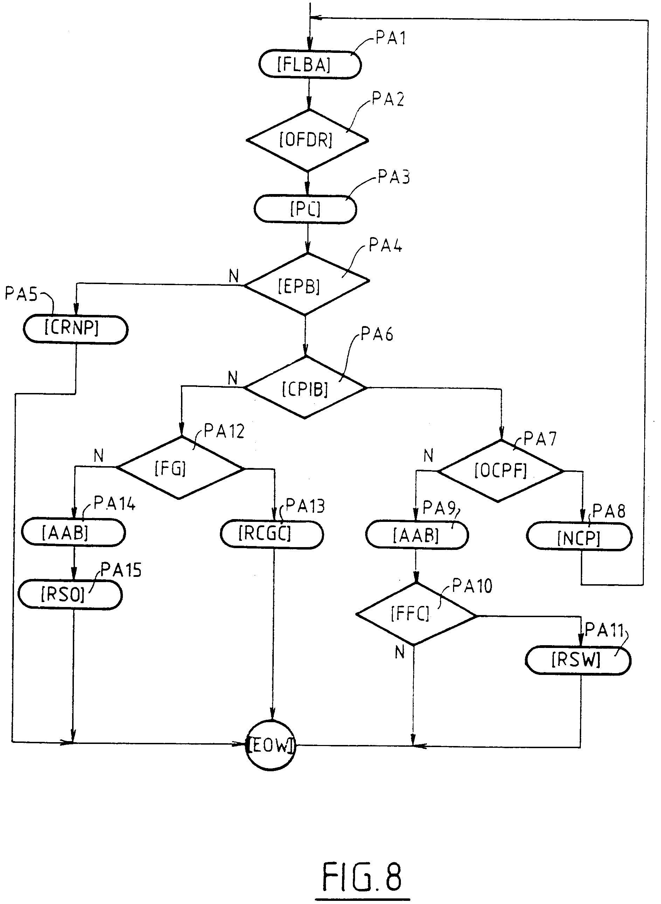

Si la réponse à la question [OFDR] de l'étape PL7 est oui, alors un branchement à un traitement spécial [PA] est prévu, ce traitement [PA] des parties de contenu sans lignes mobiles entre deux blocs est décrit ci-après avec la figure 8, c'est l'étape PL8. L'étape suivante PL9 offre deux issues [NCP/EOW]. Le première est empruntée lorsque le formatage doit être continué sur des objets encore partiellement formatés, le repère de contexte étant alors mis à la valeur correspondant au traitement de la partie de contenu suivante [NCP] et il y a retour aux étapes PL1, PL2 ... . La seconde issue est empruntée lorsqu'il n'y a plus de parties de contenu à traiter, il y a alors sortie de la boucle [EOW].

Si à l'inverse, la réponse à la question [OFDR] de l'étape PL7 est non, une nouvelle question est posée à l'étape PL10 : "Le repère de contexte indique-t-il des lignes mobiles situées à la fin d'un contenu d'un objet logique déjà formaté auparavant ?" [MLEC]. Le repère peut prendre dans cette hypothèse deux valeurs différentes g et h correspondant aux cas suivants :
**g** : Valeur utilisée pour déplacer seulement la fin d'un contenu d'un objet logique, déjà formaté dans un bloc précédent, de ce bloc précédent à un autre bloc en satisfaisant l'attribut "taille de la veuve" ; par exemple, lorsque après un appel de la fonction "Fillblock", il a été retourné une réponse signifiant qu'un nombre de lignes formatées dans le premier bloc d'une nouvelle page, à la suite d'une coupure de page, est inférieur à la "taille de la veuve".
**h** : Valeur utilisée pour déplacer des lignes lorsqu'une concaténation s'applique à l'objet logique de g.

Les valeurs **g** et **h** peuvent être également confondues, car il existe une différence de contexte infime.

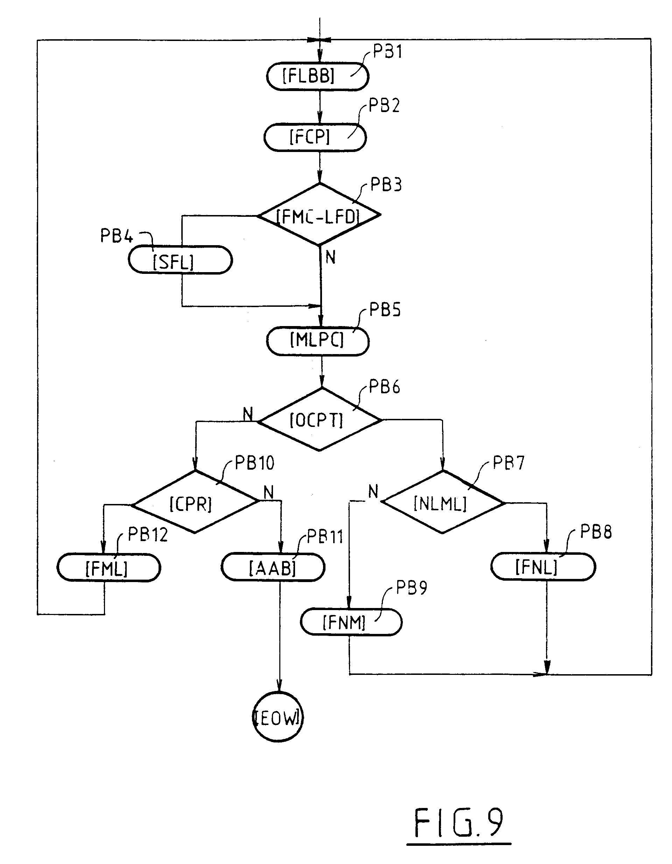

Une réponse affirmative à la question [MLEC] de l'étape PL10 entraîne l'étape PL11 qui consiste en une recherche des objets logiques, hiérarchiquement supérieurs [SFL]. En effet, le bloc contient des parties de contenu qui peuvent avoir différents objets logiques hiérarchiquement supérieurs lorsqu'il y a concaténation. Tous ces objets logiques hiérarchiquement supérieurs doivent être mis à jour avec la nouvelle "partie de contenu à écrire" formatée générée. L'étape PL12 correspond à la procédure d'appel du procédé pour le traitement des lignes mobiles [MLPC] et en particulier à un procédé appliqué au contenu décrit avec les figures 8 et 9. L'étape PL13 est relative à l'ajustement des attributs de blocs [AAB] (même procédure qu'à l'étape PL6) alors qu'à l'étape PL14 le repère de contexte est mis à une valeur i qui indique que le nombre de lignes imparties dans le bloc précédent a été utilisé et que le reste du contenu de la "partie de contenu à lire" doit être formaté dans l'autre bloc [FMC], puis il y a retour aux étapes PL1, PL2, ... .

Une réponse négative à la question [MLEC] de l'étape PL10 signifie qu'il y a des lignes mobiles à déplacer entre deux blocs et que les cas restants doivent être traités. Cette réponse négative entraîne l'étape PL15 qui permet de recenser les cas restant à traiter tenant compte des valeurs du repère de contexte [FCP]. Dans cette dernière hypothèse, le repère de contexte peut prendre quatre autres valeurs correspondant aux cas suivants :
**i** : la partie de contenu traitée est la première partie de contenu à déplacer dans un second bloc, le nombre de lignes imparties dans un premier bloc ayant été utilisé.
**j** : la partie de contenu en cours de traitement appartenait à un premier bloc, le premier bloc peut avoir encore d'autres parties de contenu subordonnées à déplacer dans le second bloc chacune d'elle doit être traitée et les objets logiques hiérarchiquement supérieurs doivent également être mis à jour.
**k, l** : le second bloc n'était pas vide avant le déplacement des lignes, ses propres parties de contenu subordonnées doivent être traitées et le contenu doit être concaténé à la fin du contenu courant dans le bloc, la valeur k signifiant la partie de contenu traitée est la première à reformater dans le second bloc, la première partie de contenu subordonnée doit être traitée, la valeur l signifiant la partie de contenu traitée appartient au second bloc mais n'est pas la première reformater dans ce bloc, la partie de contenu suivante doit être traitée.

Puis l'étape PL16 correspond à un branchement à un traitement spécial, ce traitement [PB] des parties de contenu avec lignes mobiles entre deux blocs est décrit dans la suite avec la figure 9. L'étape PL17 permet soit de recenser et de retourner les valeurs du repère de contexte telles que définies en j, k, l [RF], pour opérer un retour aux étapes PL1, PL2,..., soit lorsqu'il n'y a plus de partie de contenu à traiter de sortir de la boucle [EOW].

La figure 8 propose le schéma d'un branchement de la boucle de la figure 7 pour le traitement de parties de contenu sans lignes mobiles. L'étape PA1 correspond aux étapes PL1, PL2, PL3 (réponse négative) du début de boucle de traitement de "Fillblock" [FLBA], alors que l'étape PA2 correspond à l'étape PL7 à laquelle une réponse positive a été apportée à la question [OFDR]. A l'étape PA3, un procédé de lecture est appliqué au contenu [PC]. Ainsi, lorsque le contenu est dans une partie de contenu, cette dernière doit être lue en introduisant un décalage dans la lecture, ce décalage fait partie des informations (champs) du contexte courant. La valeur initiale de ce décalage dépend de la valeur du repère de contexte. Le décalage est remis à jour lorsque le procédé [PC] est autorisé à lire ou à relire la partie de contenu à partir du nouveau décalage jusqu'à recevoir des informations relatives à une erreur (fatale), une fin de bloc ou une fin de contenu. De même, lorsque le contenu est dans l'attribut "générateur de contenu", certains caractères peuvent déjà avoir été formatés et le procédé doit continuer de lire à partir de la valeur de décalage de la lecture précédente. Lorsqu'il n'y a plus de place pour la ligne courante, une opération de retour en arrière doit être déclenchée pour revenir à la ligne précédente, les informations relatives au contenu de cette ligne sont sauvegardées et le contexte courant est remis à jour. A l'étape PA4 qui suit une question est ainsi posée : "Y-a-t-il assez de place dans le bloc pour recevoir la ou les lignes de la partie de contenu ?" [EPB]. Si la place n'est pas suffisante, une sortie de la boucle de traitement est provoquée [EOW] à l'étape PA5 et un compte-rendu est retourné [CRNP] signifiant qu'il n'y a pas de place dans la zone éditable disponible (même pour une seule ligne). Si la place est suffisante, une autre question est posée à l'étape PA6 : "Le bloc convient-il pour recevoir complètement la partie de contenu formatée ?" [CPIB]. Si le bloc convient parfaitement, une autre question est posée à l'étape PA7 : "Y-a-t-il d'autres parties de contenu à formater ?" [OCPF]. Une réponse positive entraîne l'étape PAB au cours de laquelle le repère de contexte est mis à la valeur f, le formatage de la partie de contenu suivante doit être effectué (objets partiellement formatés) [NCP] et il y a retour au début de la boucle à l'étape PA1, PA2... . Si la réponse à la question [OCPF] de l'étape PA7 est négative, l'étape suivante PA9 est la phase d'ajustement des attributs de blocs [AAB]. Puis une question est posée à l'étape suivante PA10 : "Le repère de contexte est-il à la valeur d ?" [FFC]. Si la réponse est affirmative, cela signifie que le repère de contexte indique qu'à la suite d'un appel précédent de la fonction "Fillblock", cette dernière a signalé au procédé de mise en page du document que le contenu a été coupé et que l'attribut "taille de l'orphelin" a été satisfait, par conséquent le procédé de mise en page du contenu doit vérifier le formatage du contenu en tenant compte des attributs "taille de la veuve". Cette réponse affirmative entraîne l'étape PA11 au cours de laquelle est provoquée une procédure de retour relative à l'analyse de l'attribut "taille de la veuve" [RSW] suivie d'une sortie de la boucle de traitement [EOW]. Si, à l'inverse, la réponse à la question [FFC] de l'étape PA10 est négative, celle-ci entraîne directement une sortie de la boucle de traitement [EOW].

En outre, si la question [CPIB] posée à l'étape PA6 admet une réponse négative, une dernière question est posée à l'étape PA12 : "Le paramètre information indique-t-il que l'objet logique est un objet temporaire ?" [FG]. Une réponse positive entraîne l'étape PA13 pendant laquelle il est retourné par exemple une erreur fatale (ou une alarme) relativement aux contenus génériques des hauts et bas de page. Cette erreur doit être interprétée de la manière suivante : les contenus génériques d'un haut ou d'un bas de page ne peuvent être contenus intégralement dans la zone éditable disponible. Il n'est pas possible de partager une partie d'un haut sur une page et de placer l'autre partie sur une autre. Une erreur a certainement été commise dans l'estimation des dimensions des cadres, le fait de continuer entraînerait une pagination incorrecte. Le retour de l'erreur fatale est suivie d'une sortie de la boucle de traitement [EOW]. Par contre, si la réponse à la question [FG] de l'étape PA12 est négative, l'étape suivante PA14 est la phase d'ajustement des attributs de blocs [AAB] qui est suivie de l'étape PA15 au cours de laquelle est provoquée une procédure de retour relative à l'analyse de l'attribut "taille de l'orphelin" [RSO] elle-même suivie d'une sortie de la boucle de traitement [EOW].

La figure 9 propose le schéma d'un branchement de la boucle de la figure 7 pour le traitement de parties du contenu avec lignes mobiles. Dans ce branchement quelques lignes doivent être déplacées d'un premier bloc vers un second bloc. Ces lignes à déplacer peuvent appartenir à plusieurs parties de contenu (dans le cas d'une directive de mise en page du type "même objet de mise en page" ou pour satisfaire un attribut de présentation du type "taille de la veuve"). Le procédé de mise en page du contenu réalise différents traitements qui dépendent de la situation des parties de contenu à reformater. La fonction "Fillblock" utilise, comme cela a été vu précédemment, des repères qui permettent de distinguer ces différents contextes :
**i** : la partie de contenu traitée est la première partie de contenu à déplacer dans un second bloc, le nombre de lignes imparties dans un premier bloc ayant été utilisé.
**j** : la partie de contenu en cours de traitement appartenait à un premier bloc, le premier bloc peut avoir encore d'autres parties de contenu subordonnées à déplacer dans le second bloc, chacune d'elle doit être traitée et les objets logiques hiérarchiquement supérieurs doivent égalaient être mis à jour.
**k, l** : le second bloc n'était pas vide avant le déplacement des lignes, ses propres parties de contenu subordonnées doivent être traitées et le contenu doit être concaténé à la fin du contenu courant dans le bloc, la valeur k signifiant la partie de contenu traitée est la première à reformater dans le second bloc, la première partie de contenu subordonnée doit être traitée, la valeur l signifiant la partie de contenu traitée appartient au second bloc mais n'est pas la première à reformater dans ce bloc, la partie de contenu suivante doit être traitée.

L'étape PB1 correspond aux étapes PL1, PL2, PL3 (réponse négative), PL7 (réponse négative), PL10 (réponse négative), du début de la boucle de traitement de "Fillblock" [FLBB], de même l'étape PB2 correspond à l'étape PL15 recensant les cas restant à traiter en tenant compte des valeurs i, j, k, 1 du repère de contexte [FCP]. Suit l'étape PB3 à laquelle est posée la question : "Le repère de contexte est-il différent de la valeur i, l'objet logique hiérarchiquement supérieur est-il différent de celui de la partie de contenu antérieure ?" [FMC-LFD]. Une réponse positive signifie que le repère de contexte n'indique pas que le nombre de lignes imparties dans un premier bloc a été utilisé mais indique par contre une des valeurs **j**, **k** ou **l**, le reste du contenu de la "partie du contenu à lire" doit être formaté dans un second bloc, mais que l'objet logique hiérarchiquement supérieur est différent de celui de la partie de contenu antérieure. Cette réponse positive entraîne l'étape PB4 au cours de laquelle est effectuée une recherche des objets logiques hiérarchiquement supérieurs [SFL] qui sont en outre mis à jour. Puis à l'étape PB5, il est fait appel à la procédure de traitement des lignes mobiles [MLPC] qui appelle le procédé de lecture appliqué au contenu déjà décrit avec l'étape PA3 de la figure 8. En outre, une réponse négative à la question [FMC-LFD] de l'étape PB3 entraîne directement l'étape PB5 [MLPC], dans ce cas la recherche des objets hiérarchiquement supérieurs étant bien entendu inutile. Au cours de la prochaine étape PB6 est posée la question : "Y-a-t-il d'autres parties de contenu à traiter ? " [OCPT]. S'il existe d'autres parties de contenu à traiter, l'étape suivante est PB7 au cours de laquelle une autre question est posée : "Le repère de contexte indique-t-il la valeur k ou la valeur l ?" [NLML]. Une réponse positive entraîne la fixation du repère de contexte à la valeur l [FNL] (la prochaine partie de contenu subordonnée doit être traitée et le contenu concaténé à la fin du contenu courant dans le second bloc), c'est l'étape PB8 puis un retour au début de la boucle de traitement aux étapes PB1, PB2, ... . Une réponse négative par contre entraîne la fixation du repère de contexte à la valeur j [FNM] (les parties de contenu subordonnées doivent être traitées et les objets logiques hiérarchiquement supérieurs doivent également être mis à jour) c'est alors l'étape PB9 qui est suivie d'un retour au début de la boucle de traitement aux étapes PB1, PB2, ... . Inversement, s'il n'existe plus de partie de contenu à traiter, cette réponse négative à la question [OCPT] de l'étape PB6 implique la question suivante de l'étape PB10 : "Existe-t-il une quelconque partie de contenu à reformater dans le bloc suivant ?" [CPR]. S'il n'y a plus aucune partie de contenu à reformater c'est l'étape PB11 qui suit pour effectuer l'ajustement des attributs de blocs [AAB] puis une sortie de la boucle de traitement [EOW] est provoquée. Si, par contre, il reste des parties de contenu à reformater, au cours de l'étape PB12 suivante, le repère de contexte est placé à la valeur k [FML] (la première partie de contenu doit être reformatée et concaténée à la fin du contenu courant du second bloc), puis il y a retour au début de la boucle de traitement aux étapes PB1, PB2, ... .

Ainsi, le lien qui relie le procédé de mise en page du contenu au procédé de mise en page du document tient principalement à un contexte, une zone éditable, des objets de mise en page et des objets logiques et également quelques contraintes (indivisibilité, concaténation, etc ... ) et ce qui est retourné par le procédé de mise en page du contenu ce sont des parties de contenu formatées et des dimensions mises à jour ainsi qu'un compte-rendu du contexte.

Outre les avantages décrits dans le. préambule, le module à formater mettant en oeuvre le procédé de mise en page selon l'invention permet avantageusement de réaliser un grand nombre de fonctions dont certaines sont promptement retracées ci-après.

Lors de l'application du procédé de mise en page, les objets logiques sont mis en page dans l'ordre logique pour produire une structure de mise en page spécifique dans laquelle plusieurs flux de données peuvent être présents. Ceci permet de supporter les multicolonnes (colonnes "serpentées" et synchronisées, les colonnes synchronisées servant surtout à faire des tableaux) et les notes de bas de page. Des colonnes serpentées n'ayant pas des largeurs égales peuvent être équilibrées.

Les différents attributs utilisés autorisent une numérotation automatique des pages, sections, notes de bas de page, des figures, des tableaux, etc ... .

L'arrêt du formatage, lorsqu'une description logique a été mise en page, est possible en se donnant un paramètre supplémentaire pendant le fonctionnement du module à formater, ce paramètre étant un identificateur d'objet de cette description logique.

Le formatage partiel d'un document retraitable d'une description logique donnée à une autre est également possible et avantageux. Ainsi, lors de la réception d'un document retraitable, une partie de celui-ci, que l'on désire consulter rapidement, peut être formatée pour être affichée rapidement. Le formatage peut ensuite être repris.

Une prise pour la justification ou la coupure des mots est également possible ce qui permet de remplacer l'algorithme de justification par un autre et de modifier les coupures de mot qui dépendent la pluspart du temps des langues utilisées.

En outre, le module à formater peut supporter un grand nombre de polices de caractères et de tailles de fontes.

Enfin, le module à formater autorise avantageusement le formatage de tout type d'écritures, écriture de haut en bas, de gauche à droite ou de droite à gauche.

## Revendications

1. Procédé de mise en page de documents structurés contenant du texte et des graphiques mis en oeuvre par un module à formater, dans lequel en premier lieu, est effectuée la lecture de la structure logique générique, de la structure logique spécifique et de la structure de mise en page générique pour créer, au fur et à mesure de cette lecture, la structure de mise en page spécifique, incluant pour cela, d'une part un procédé de mise en page du document créant la structure de mise en page spécifique conformément à la structure de mise en page générique et aux informations découlant de la structure logique spécifique, de la structure logique générique et, lorsqu'ils existent, des styles de mise en page, et d'autre part associé au procédé de mise en page du document un procédé de mise en page du contenu, utilisant les informations contenues dans les styles de présentation et chargé de mettre en page les différentes parties du contenu du document dans les zones disponibles déterminées lors de l'application du procédé de mise en page du document, caractérisé en ce qu'il utilise une pluralité de processus de mise en page récursifs, ainsi, pour créer la structure de mise en page spécifique, il est d'abord créé l'objet de plus haut niveau dans la hiérarchie de la structure de mise en page spécifique, objet appelé racine physique, puis selon la structure de mise en page générique, l'attribut "générateur d'objets subordonnés" de la racine physique est évalué pour créer toute la structure requise, de telle manière que chaque fois que le "générateur d'objets subordonnés" contient un terme requis ou répétitif, un objet de mise en page est créé tandis que lorsqu'il contient un terme optionnel, optionnel répétitif ou de choix un objet temporaire est créé, ensuite à partir de l'objet de plus haut niveau dans la hiérarchie de la structure logique spécifique, objet appelé racine logique, est appliqué un traitement récursif à tous les objets subordonnés de la racine logique jusqu'à remonter à ladite racine logique en établissant des contraintes de création et de placement.

2. Procédé de mise en page selon la revendication 1, caractérisé en ce que d'une part, chaque fois qu'un attribut "générateur d'objets subordonnés" contient un terme répétifif, deux objets différents sont créés et insérés : un objet obligatoire ou une séquence d'objets correspondants et un objet temporaire qui contient un terme optionnel répétitif et d'autre part chaque fois qu'un objet temporaire optionnel répétitif est utilisé les objets correspondants sont créés et insérés alors qu'un autre objet temporaire optionnel répétitif équivalent est également créé.

3. Procédé de mise en page selon la revendication 2, caractérisé par le fait que les-processus de mise en page récursifs d'analyse de la structure sont mis en oeuvre par des sous-modules du module à formater dont un premier sous-module récursif dit sous-module logique qui effectue la lecture des objets logiques jusqu'à accéder à la structure de mise en page et deux sous-modules récursifs appelés sous-modules de mise en page qui permettent d'analyser les objets de mise en page jusqu'à ce que celui qui est requis soit trouvé, le premier sous-module de mise en page cherchant un objet de mise en page dans un ensemble d'objets de mise en page donné et étant appelé par le second sous-module de mise en page qui s'intéresse à l'objet de mise en page courant contenu dans le flux d'informations courant, le second sous-module de mise en page étant lui-même appelé par le sous-module logique ou s'appelant lui-même si l'analyse n'aboutit pas pour chercher l'objet de mise en page courant hiérarchiquement supérieur, lesdits processus étant ainsi répétés jusqu'à ce que l'analyse soit achevée.

4. Procédé de mise en page selon la revendication 3, caractérisé en ce que pour modifier ou supprimer des parties du document déjà formatées, il utilise un processus dit de "retour en arrière" dans lequel la première étape consiste en une recherche par les sous-modules de mise en page des objets de mise en page à déplacer et des objets logiques correspondants ou vice-versa, la correspondance étant réalisée en utilisant les parties du contenu, la seconde étape consiste en une recherche de l'objet à reformater hiérarchiquement supérieur et commun à tous les objets logiques concernés, ledit objet étant repéré et ainsi de suite, pour chaque niveau hierarchique le premier objet impliqué étant repéré, la troisième étape consiste à déplacer les objets de mise en page ainsi que les parties de contenu concernés alors que la quatrième étape consiste en un dialogue entre les sous-modules de mise en page qui envoient un message d'erreur au sous-module logique qui traite chaque objet logique et qui vérifie si l'objet logique concerné est repéré, si celui-ci est repéré, il le reformate ainsi que tous ses objets subordonnés repérés, sinon il retourne un message d'erreur.

5. Procédé de mise en page selon la revendication 4, caractérisé en ce que la fonction récursive "Makelayout" mise en oeuvre par le sous-module dit logique permet de créer un objet ou un ensemble d'objets de mise en page pour formater l'objet logique courant et consiste principalement à lire l'objet logique en discriminant la racine logique, l'objet composite ou l'objet basique et à appeler les fonctions de mise en page mises en oeuvre par les sous-modules dits de mise en page lorsque l'objet est basique ou lorsque les directives de mise en page le requièrent, puis à s'appeler elle-même pour lire les objets logiques subordonnés.

6. Procédé de mise en page selon la revendication 5, caractérisé en ce que la fonction récursive "Give object ext" mise en oeuvre par le second sous-module dit de mise en page appelée par la fonction récursive "Makelayout" ou par elle-même cherche ou crée, lorsque c'est possible, un objet de mise en page à partir de l'objet de mise en page courant dans la structure de mise en page, objet de mise en page conforme aux directives spécifiées, ladite fonction "Give object ext" dans un premier temps appelant pour cela la fonction récursive "Give object kernel" mise en oeuvre par le premier sous-module dit de mise en page qui cherche parmi les objets subordonnés d'un ensemble d'objets de mise en page courants, décidant en cas de conflit ou d'incompatibilité avec une directive de mise en page d'ignorer cette dernière ou de lancer une opération de retour en arrière, et dans un second temps si aucun objet de mise en page pertinent n'est trouvé, s'appelant elle-même pour relancer le même processus pour l'objet de mise en page courant hiérarchiquement supérieur, et ainsi de suite, d'un ensemble d'objets de mise en page à un autre en avançant à partir de la position courante vers l'avant.

7. Procédé de mise en page selon la revendication 6, caractérisé en ce que la fonction récursive "Give object kernel" mise en oeuvre par le premier sous-module dit de mise en page effectue la recherche du premier objet ayant des directives spécifiées dans l'ensemble d'objets de mise en page courant en formatant les contenus génériques et utilise les règles opératoires suivantes :
- si un objet est terminé, elle retourne un message précisant que les directives de mise en page n'ont pas été trouvées,
- elle analyse l'objet de mise en page courant ; si celui-ci est un objet temporaire qui n'a jamais été évalué, elle l'évalue, si c'est un objet requis elle cherche les directives de mise en page et une fois trouvées, elle émet un message précisant que celles-ci sont trouvées.
- elle s'appelle elle-même pour traiter les objets subordonnés jusqu'à ce que l'objet désiré soit trouvé ou jusqu'à ce qu'il n'y ait plus d'objets subordonnés.

8. Procédé de mise en page selon la revendication 7 caractérisé en ce que la fonction "Fill Gene" est appelée pour formater des contenus génériques, d'une part dans le cas où s'applique un attribut "source logique" en créant l'ensemble d'objets logiques spécifiques correspondant, puis en appelant la fonction "Makelayout" pour le formater et une fois terminé en le supprimant, d'autre part dans le cas d'une référence à une description de classe d'objets d'un document générique externe au document en cours de traitement en fixant les positions et dimensions du bloc correspondant et en appliquant le procédé de mise en page du contenu.

9. Procédé de mise en page selon la revendication 8, caractérisé en ce que la fonction "Fillblock" est appelée pour formater ou reformater tout ou partie d'une partie de contenu associée à un objet logique et à ses objets subordonnés (soit à partir de la structure logique spécifique soit temporairement produit à partir d'un attribut) dans un bloc à l'intérieur d'une zone éditable disponible de dimensions maxima, la fonction "Fillblock" vérifiant si le premier paramètre reçu est relatif à un objet logique spécifique ou à un objet logique temporairement créé et au moyen de repères tenant compte à tout moment du contexte propre aux directives de mise en page, au reformatage dû à une procédure de retour en arrière, à un déplacement de tout ou partie d'un contenu, les repères étant positionnés après analyse du contexte par le procédé de mise en page du document.
